Europäisches Patentamt

European Patent Office

Office européen des brevets

(19)

(11) **EP 0 759 048 B1**

(12) **EUROPEAN PATENT SPECIFICATION**

(45) Date of publication and mention
of the grant of the patent:
**21.07.1999 Bulletin 1999/29**

(21) Application number: **95920384.5**

(22) Date of filing: **09.05.1995**

(51) Int Cl.⁶: **C08L 23/06**, C08L 23/04,
C08J 5/18

(86) International application number:
**PCT/US95/05757**

(87) International publication number:
**WO 95/30713 (16.11.1995 Gazette 1995/49)**

(54) **MEDIUM MODULUS FILM COMPRISING SUBSTANTIALLY LINEAR POLYETHYLENE AND FABRICATION METHOD**

MITTLEREMODULFOLIE ENTHALTEND IM WESENTLICHEN LINEARES POLYÄTHYLEN UND VERFAHREN ZUR HERSTELLUNG

FILM DE MODULE MOYEN COMPRENANT DU POLYETHYLENE SENSIBLEMENT LINEAIRE ET PROCEDE DE FABRICATION

(84) Designated Contracting States:
**BE DE ES FR GB IT NL SE**

(30) Priority: **09.05.1994 US 239496**

(43) Date of publication of application:
**26.02.1997 Bulletin 1997/09**

(73) Proprietor: **THE DOW CHEMICAL COMPANY**
**Midland, Michigan 48674 (US)**

(72) Inventors:
• **WOOSTER, Jeffrey, J.**
**Lake Jackson, TX 77566 (US)**
• **COBLER, Brad, A.**
**Lake Jackson, TX 77566 (US)**
• **CADY, Larry, D.**
**Houston, TX 77027 (US)**

• **BERTELSMAN, David, G.**
**Missouri City, TX 77459 (US)**
• **DODSON, Lisa, E.**
**Lake Jackson, TX 77566 (US)**
• **MCKINNEY, Osborne, K.**
**Lake Jackson, TX 77566 (US)**

(74) Representative:
**Weiss, Wolfgang, Dipl.-Chem. Dr. et al**
**Patentanwälte**
**Weickmann & Partner,**
**Kopernikusstrasse 9**
**81679 München (DE)**

(56) References cited:
**US-A- 4 632 801          US-A- 4 770 912**

## Description

This invention pertains to a medium modulus polyethylene film and a method for preparing such film. The novel film can be prepared by variable-stalk blown extrusion. The film has surprisingly high tear and impact properties. The film can be used in heavy-duty packaging and shipping applications and also in hot-fill packaging applications.

Polyethylene films with tear and impact properties are needed for packaging and shipping heavy items, such as building and construction materials, lawn and garden materials, salt, polymer pellets. Heavy-duty films and bags must also possess good rigidity and stiffness (modulus). Good film strength properties are required to prevent bag ruptures and product losses during distribution while the rigidity and stiffness provide good dimensional stability. Dimensional stability is important during fabrication and packaging operations because it assists in maintaining the correct positioning of the film or bag as it is conveyed through the various equipment stations during bag-making and product-filling operational steps. Dimensional stability at elevated temperatures during the product-filling step is also required in some instances when the product ( for example, salt) is packaged hot such as, for example, in some form-fill-seal packaging operations.

Heavy-duty packaging currently involves monolayer and multilayer polyethylene films having a calculated film density as low as about 0.920 g/cc. Typical polyethylene film compositions for heavy-duty packaging include (a) blends of linear low density polyethylene (LLDPE) with low density polyethylene (LDPE), (b) high density polyethylene (HDPE) modified by adding rubber and other elastomers ( for example, polybutylene) to impart impact resistance, (c) LLDPE blended with a low molecular weight, high density polyethylene (LMW-HDPE), (d) LLDPE blended with a high melt flow rate HDPE, or (e) LLDPE blended with partially isotactic polymers. See, for example, US Patent 5,041,401 by Shirodkar et al., US Patent 5,102,955 by Calabro et al. and US Patent 4,828,906 by Nishimura et al. Also known is the polyethylene composition disclosed by Thiersault et al. in US Patent 4,786,688 which contains 80 to 98 percent by weight HDPE and 2 to 20 percent by weight LLDPE which is alleged to be useful for thin film (20 microns) and blow molding applications. Additionally, ternary polymer blends have been used in this packaging application. For example, in US Patent 4,824,912, Su et al. disdose LLDPE blended with minor amounts of a low molecular weight HDPE (LMW-HDPE) and a high molecular weight HDPE (HMW-HDPE) for processability and film property improvements over LLDPE used alone.

The prior art shows that the linear ethylene polymers currently used in making polyethylene films provide increased tear strength as density increases to about 0.920 g/cc and then show substantially lower tear strengths as density increases above about 0.920 g/cc. Attempts to improve tear strength by increasing film thickness have been only marginally effective. When film thickness is increased to improve strength properties, the rigidity of present art polyethylene films increases disproportionately to impact and tear resistance properties, and thereby thicker films offer practitioners little or no additional benefit. Thus, although a variety of polyethylene films and film compositions are known, prior art polyethylene films are not completely satisfactory for use in heavy-duty packaging applications because they do not offer the desired balance of high tear and impact resistance at the required film rigidity or modulus and/or they do not have the desired dimensional stability.

Hence, it is an object of the present invention to provide a polyethylene film with improved tear strength and impact resistance and good dimensional stability, as well as a method for making the same, which can be used in heavy-duty packaging and shipping applications and for use in hot fill packaging applications.

Applicants have discovered a novel medium modulus, polyethylene blown film having good impact and tear strengths, and a method for preparing such film. The novel film comprises:

(A) from 60 to 95 weight percent, based on the combined weights of components (A) and (B), of at least one high molecular weight linear ethylene polymer having a density in the range of 0.92 to 0.96 g/cc and an Is melt index in the range of 0.1 to 3 g/10 minutes, and
(B) from 5 to 40 weight percent, based on the combined weights of components (A) and (B), of at least one substantially linear ethylene/$\alpha$-olefin interpolymer characterized as having:

i. a melt flow ratio, $I_{10}/I_2$, $\geq 5.63$,
ii. a molecular weight distribution, $M_w/M_n$, defined by the equation:

$$M_w/M_n \leq (I_{10}/I_2) - 4.63,$$

and
iii. a critical shear rate at onset of surface melt fracture at least 50 percent greater than the critical shear rate at onset of surface melt fracture of a Ziegler polymerized heterogeneously branched linear ethylene polymer or homogeneously branched linear ethylene polymer having about the same $I_2$ and $M_w/M_n$,

wherein the substantially linear ethylene/α-olefin interpolymer is further characterized as containing at least one α-olefin monomer and having a density in the range of 0.85 to 0.92 g/cc and an $I_2$ melt index in the range of 0.3 to 3 g/10 minutes.

The novel method for producing such medium modulus polyethylene film is a variable-stalk extrusion process which comprises the steps of:

(1) providing an extrudable thermoplastic composition containing (A) from 60 to 95 weight percent, based on the combined weights of components (A) and (B), of at least one high weight molecular linear ethylene polymer having a density in the range of 0.92 to 0.96 g/cc and an $I_5$ melt index in the range of 0.1 to 3 g/10 minutes, and (B) from 5 to 40 weight percent, based on the combined weights of components (A) and (B), of at least one substantially linear ethylene/α-olefin interpolymer characterized as having:

i. a melt flow ratio, $I_{10}/I_2$, ≥ 5.63,
ii. a molecular weight distribution, $M_w/M_n$, defined by the equation:

$$M_w/M_n \leq (I_{10}/I_2) - 4.63,$$

and
iii. a critical shear rate at onset of surface melt fracture at least 50 percent greater than the critical shear rate at onset of surface melt fracture of a Ziegler polymerized heterogeneously branched linear ethylene polymer or homogeneously branched linear ethylene polymer having about the same $I_2$ and $M_w/M_n$,

wherein the substantially linear ethylene/α-olefin interpolymer is further characterized as containing at least one α-olefin monomer and having a density in the range of 0.85 to 0.92 g/cc and an $I_2$ melt index in the range of 0.3 to 3 g/10 minutes,
(2) introducing said composition of step (1) into a film extrusion apparatus equipped with an annular die,
(3) extruding said composition of step (1) to form a tube that is subsequently blown-up and drawn-down through nip and take-off rollers to form a layflat film with a thickness greater than about 1.25 mils (31 μm), and
(4) conveying said film formed in step (3) for subsequent use down-line of the film extrusion apparatus of step (2) or collecting said film formed in step (3) for subsequent use offline.

The film of the present invention has improved tear and impact performance that is not ordinarily expected for medium modulus, polyethylene films. The novel films have at least a 30 percent, and preferably 50 percent, improvement in impact and tear properties relative to prior art polyethylene films having about the same film density, melt index and thickness. The benefit of the higher performing novel film is practitioners can now meet specified heavy-duty film requirements at substantially lower costs by down-gauging and/or by using higher diluent and recycled material loadings.

Figure 1 plots data describing the relationship between Mw/Mn and $I_{10}/I_2$ for three distinct polymer types: substantially linear polyethylene, heterogeneous linear polyethylene and homogeneous linear polyethylene.

Figures 2-4 are used to graphically summarize data presented in the Examples.

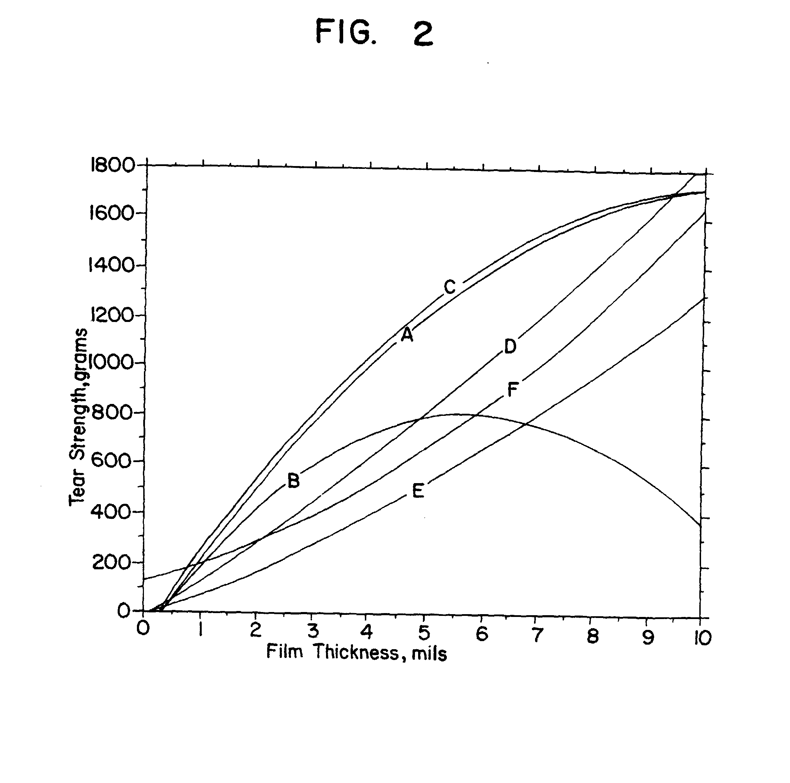

Figure 2 plots the relationship between tear strength and film thickness for Inventive Films and Comparative Films. Inventive Films are prepared from Film Compositions A, B and C and Comparative Films are prepared from Film Compositions D, E and F.

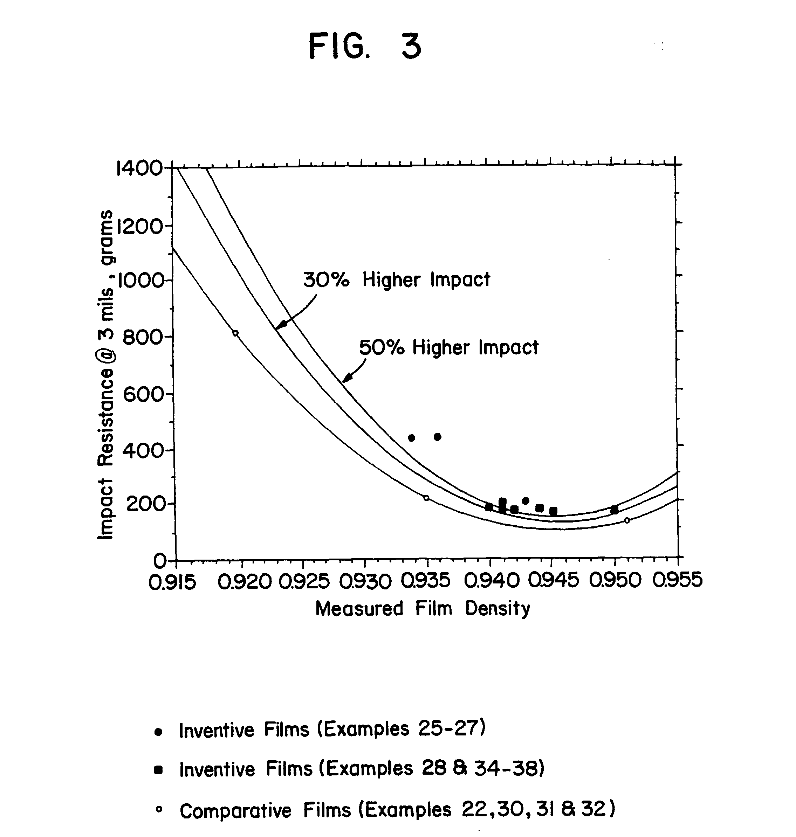

Figure 3 plots the relationship between impact resistance at 3 mils (75 μm) and measured film density for Inventive Films and Comparative Films. Inventive Films are prepared from Film Composition G-J and P-V. Comparative Films are prepared from Film Compositions F, L, M and N.

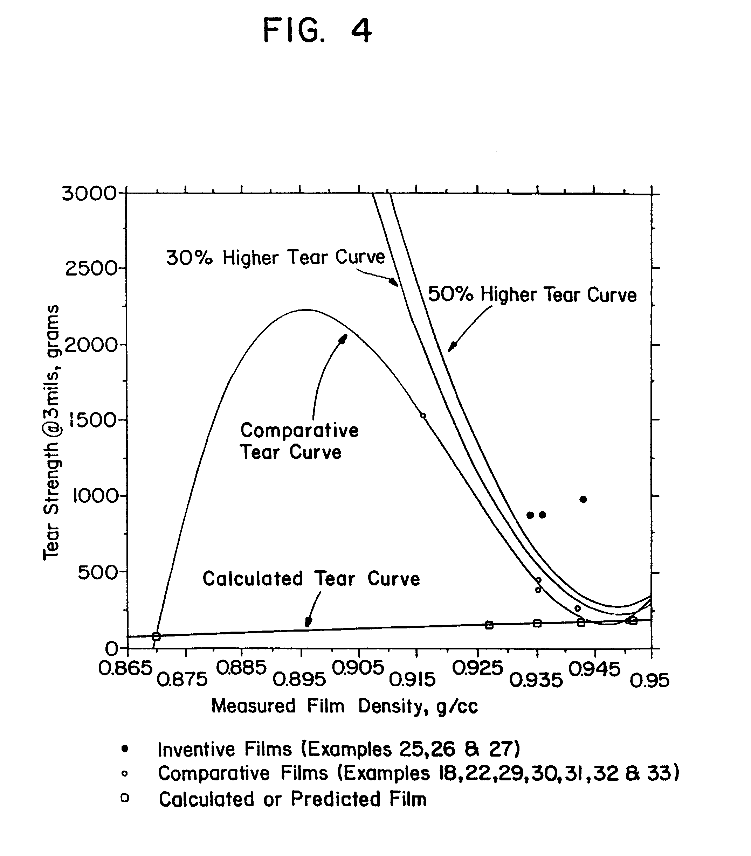

Figure 4 plots the relationship between tear strength at 3 mils (75 μm) and measured film density for Inventive Films and both actual and predicted Comparative Films. Inventive Films are prepared from Film Composition G, H and I. Comparative Films are prepared from Film Compositions E, F and K-O. The calculated or predicted tear strengths of comparative blend compositions are based on a 0.951 g/cc HMW-HDPE and a 0.870 g/cc SLEP at various ratios.

"Substantially linear ethylene polymer" (SLEP) herein designates an ethylene polymer having a polymer backbone that is substituted with from 0.01 long chain branches/1000 carbons to 3 long chain branches/1000 carbons, more preferably from 0.01 long chain branches/1000 carbons to 1 long chain branches/1000 carbons, and especially from 0.05 long chain. branches/1000 carbons to 1 long chain branches/1000 carbons.

"Long chain branching" is defined herein as a chain length of at least 6 carbons, above which the length cannot be distinguished using $^{13}C$ nuclear magnetic resonance spectroscopy. The long chain branch can be as long as about the same length as the length of the polymer back-bone.

Long chain branching is determined by using $^{13}$C nuclear magnetic resonance (NMR) spectroscopy and is quantified using the method described by Randall <u>(Rev. Macromol. Chem. Phys.,</u> C29, V. 2&3, p. 285-297).

The terms "ultra low density polyethylene" (ULDPE), "very low density polyethylene" (VLDPE) and "linear very low density polyethylene" (LVLDPE) have been used interchangeably in the polyethylene art to designate the polymer subset of linear low density polyethylenes having a density less than or equal to about 0.915 g/cc. The term "linear low density polyethylene" (LLDPE) is then applied to those linear polyethylenes having a density above about 0.915 g/cc.

The terms "heterogeneous" and "heterogeneously branched" are used herein in the conventional sense in reference to a linear ethylene/α-olefin polymer having a comparatively low short chain branching distribution index. The short chain branching distribution index (SCBDI) is defined as the weight percent of the polymer molecules having a comonomer content within 50 percent of the median total molar comonomer content. The short chain branching distribution index of polyolefins can be determined by well-known temperature rising elution fractionation techniques, such as those described by Wild et al., <u>Journal of Polymer Science, Poly. Phys. Ed.,</u> Vol. 20, p. 441 (1982), L. D. Cady, "The Role of Comonomer Type and Distribution in LLDPE Product Performance," SPE Regional Technical Conference, Quaker Square Hilton, Akron, Ohio, October 1-2, pp. 107-119 (1985), or US Patent 4,798,081. Heterogeneous linear ethylene/α-olefin polymers typically have a SCBDI less than about 30 percent.

The terms "homogeneous" and "homogeneously branched" are used herein in the conventional sense in reference to an ethylene/α-olefin polymer having a comparatively high short chain branching distribution index (SCBDI) as determined by well-known temperature rising elution fractionation techniques. Homogeneous ethylene/α-olefin polymers typically have a SCBDI greater than or equal to about 30 percent.

The term "medium modulus" is used herein in reference to the novel film to mean the calculated film density is in the range of 0.923 to 0.95 g/cc. The term "calculated film density" is used herein to mean the density of film when calculated from the known weight fractions and the measured annealed densities of the component polymers or layers.

The term "thick" is used herein in reference to the novel film to mean a film thickness greater than about 1.25 mils (31 μm).

The term "variable-stalk extrusion" is a new term of art used herein to express the distance between the annular film die and stalk height or bubble expansion point which can be varied from 0 inches (0 centimeters) to greater than 144 inches (366 centimeters) during blown film fabrication. The term includes both well-known pocket blown film extrusion and stalk blown film extrusion. The term "high stalk extrusion" is used herein in the conventional sense to mean a distance between the annular film die and the air ring that is greater than or equal to 30 inches (76 centimeters). The term "low stalk extrusion" is used herein in the conventional sense to mean a distance in the range of 5 inches (12.7 centimeters) to 30 inches (76 centimeters).

The term "hot-fill" herein refers to a packaging or product-filling operation where the product temperature is greater than 45°C. The term "heavy-duty" herein refers generally to industrial items packaged in bulk or having a single-package weight greater than 10 pounds (4.5 kilograms).

The density of the polymers used to make the medium modulus film of the present invention is measured in accordance with ASTM D-792 and is reported as grams/cubic centimeter (g/cc). The measurements reported in the Examples below are determined after the polymer samples have been annealed for 24 hours at ambient conditions.

Melt index measurements are performed according to ASTM D-1238, Condition 190°C/2.16 kilogram (kg) and Condition 190°C/5 kg, and are known as $I_2$ and $I_5$, respectively. Melt index is inversely proportional to the molecular weight of the polymer. Thus, the higher the molecular weight, the lower the melt index, although the relationship is not linear. Melt index is reported as g/10 minutes. For purposes of this invention, in calculating certain values in the Examples, $I_5$ and $I_2$ values roughly relate to one another by a factor of about 5.1; for example, a 1.0 $I_2$ index melt is equivalent to about a 5.1 $I_5$ melt index. Melt index determinations can also be performed with even higher weights, such as in accordance with ASTM D-1238, Condition 190°C/10 kg and Condition 190°C/21.6 kg, and are known as $I_{10}$ and $I_{21.6}$, respectively.

The term "melt flow ratio" is defined herein in the conventional sense as the ratio of a higher weight melt index determination to a lower weight determination. For measured $I_{10}$ and $I_2$ melt index values, the melt flow ratio is conveniently designated as $I_{10}/I_2$. For $I_{21.6}$ and $I_{10}$ values, the ratio is designated $I_{21.6}/I_{10}$. Other melt flow ratios are occasionally used respecting polyethylene compositions, such as, for example, $I_5/I_2$ based on $I_5$ and $I_2$ melt index measurements. In general, $I_{21.6}/I_{10}$ and $I_5/I_2$ determinations provide similar melt flow values and $I_{10}/I_2$ values are usually greater than $I_{21.6}/I_{10}$ values by a factor of about 4.4 and this factor is used for purposes of this invention in calculating certain values in the Examples.

The tear resistance of the film of the present invention is measured in accordance with ASTM D1922 and is reported in grams. Tear resistance in measured both the machine direction (MD) and in the cross direction (CD). The term "tear strength" is used herein to represent the average between MD and CD tear resistance values and, likewise, is reported in grams. The impact resistance of the film of the instant invention is measured in accordance with ASTM D1709. Where indicated and according to the relationship of higher thicknesses yield increased performance values, tear and impact results are normalized to exactly 3 mils (75 μm) by proportionate increases or decreases based on actual measured (micrometer) film thickness; however, such normalization calculations are only performed and reported where thickness variations are less than 10 percent, that is, where the measured thickness is in the range of 2.7 - 3.3 mils (67.5-82.5 μm).

The medium modulus, polyethylene film of the present invention has a calculated film density in the range of 0.923 g/cc to 0.95 g/cc, especially, 0.926 g/cc to 0.948 g/cc, and more especially, 0.93 g/cc to 0.945 g/cc.

The film thickness is generally greater than about 1.25 mil (31 μm), especially, in the range of 1.5 mil (37.5 μm) to 8.75 mils (219 μm), and more especially, in the range of 2 mils (50 μm), to 8 mils (200 μm).

These novel films have tear strength or, alternately, impact resistance, at least 30 percent greater than the tear strength or impact resistance of a comparative prior art polyethylene film having about the same film density, melt index and film thickness.

The tear strength of the novel film is also characterized by the following equation:

$$\text{tear strength (grains)} = Ax + Bx^2 + C$$

where A, B and C are numerical values and x is film thickness (mils); when A is less than or equal to about 150, B is greater than or equal to about 12.5, preferably greater than or equal to about 13.5, and more preferably greater than or equal to about 14.5; and when A is greater than about 150, B is in the range of -80 to 40, preferably -70 to 20, and more preferably -60 to 0. For example, the expression $307.18x - 26.219x^2 - 98.134$ is thought to represent the tear strength of the film of the present invention, whereas the expression $138.22x + 4.8116x^2 - 19.364$ does not

The strength of the novel film can be alternately characterized by the following equation:

$$\text{tear strength (grams)} = Ax^2 - Bx + C$$

where A, B and C are numerical values and x is measured film density (g/cc), wherein A is greater than or equal to 1.5 x $10^6$, preferably greater than or equal to 1.7 x $10^6$ and B is greater than or equal to 2.75 x $10^6$, preferably greater than or equal to 3.0 x $10^6$. For example, the following expression is representative of 30 percent greater tear strength than a comparative polyethylene film having about the same melt index, film density and thickness:

$$\text{tear strength (grams)} = 1.565 \times 10^6 (x^2) - 2.971 \times 10^6 (x) + 1.41 \times 10^6.$$

The film can be even further or alternately characterized by the following equation:

$$\text{impact resistance (grams)} = Ax^2 - Bx + C$$

where A, B and C are numerical values and x is measured film density (g/cc), where A is greater than or equal to 1.4 x $10^6$, preferably greater than or equal to 1.5 x $10^6$ and B is greater than or equal to 2.5 x $10^6$, preferably greater than or equal to 2.75 x $10^6$. For example, the following expression is representative of 30 percent greater impact resistance than a comparative polyethylene film having about the same melt index, film density and thickness:

$$\text{impact resistance (grams)} = 1.415 \times 10^6 (x^2) - 2.676 \times 10^6 (x) + 1.265 \times 10^6.$$

This novel film can be conveniently formed into bags and is useful in heavy-duty packaging and shipping applications as well as in hot-fill packaging applications where films with a good property balance, that is, high strength and medium modulus with good tear, impact and dimensional stability, are needed.

The high molecular weight linear ethylene polymers, Component (A), for use in preparing the medium modulus, polyethylene film of the instant invention are a known class of compounds which can be produced by any well-known particle-form polymerization process, such as slurry polymerization and gas phase polymerization. Preferably, the high molecular weight linear ethylene polymers are produced using well-known Phillips or Ziegler type coordination catalysts, although metallocene catalyst systems can also be used. Although preferred, with conventional Ziegler type catalysts, slurry polymerization processes are generally limited to polymer densities greater than about 0.940 g/cc and especially limited to polymer densities greater than about 0.935 g/cc, that is, about 0.935 g/cc is the practical lower commercial limit for slurry polymerization.

The high molecular weight linear ethylene polymer can be an ethylene homopolymer or a copolymer of ethylene with at least one a-olefin of from 3 to 20 carbon atoms. However, preferably, the high molecular weight linear polymer is a copolymer with at least one $C_3$-$C_{20}$ $\alpha$-olefin, such as 1-propylene, 1-butene, 1-isobutylene, 4-methyl-1-pentene, 1-hexene, 1-heptene and 1-octene. Most preferably, the high molecular weight linear ethylene polymer is an ethylene/1-butene copolymer prepared by a low pressure slurry polymerization process. The novel film comprises from 60 to 95 weight percent high molecular weight linear ethylene polymer, preferably 65 to 90 weight percent, and more preferably 70 to 85 weight percent.

Component (A) can also be a blend of linear ethylene polymers. Such blends can be prepared in-situ ( for example, by having a mixture of catalysts in a single polymerization reactor or by using different catalysts in separate reactors connected in parallel or in series) or by physical blending of polymers.

The high molecular weight linear ethylene polymer has an $I_5$ melt index in the range of 0.1 g/10 minutes to 3 g/10, preferably, 0.1 g/10 minutes to 2 g/10 minutes and, more preferably, 0.15 g/10 minutes to 1 g/10 minutes. Additionally, the linear polymer preferably has a bimodal molecular weight distribution (MWD) and an $I_{21.6}/I_{10}$ ratio in the range of from 1 to 12, preferably in the range of from 3.5 to 10, more preferably in the range of from 4 to 8, and most preferably in the range of from 4.5 to 6.

The high molecular weight linear ethylene polymer, which includes, but is not limited to, LLDPE, LMDPE and HDPE, and mixtures thereof, preferably has a density in the range of from 0.92 g/cc to 0.96 g/cc, more preferably, in the range of from 0.93 g/cc to 0.96 g/cc, and most preferably, in the range of from 0.935 g/cc to 0.958 g/cc.

The substantially linear ethylene/$\alpha$-olefin polymers used in the present invention Component (B), are a unique class of compounds that are defined in US 5,272,236 and US Patent 5,278,272 by Lai et al. Lai et al. teach that such polymers are preferably prepared by a continuous, solution phase polymerization process using the constrained geometry catalyst discovered by Stevens et al. US Patent 5,055,438. The substantially linear ethylene/$\alpha$-olefin interpolymers contain ethylene interpolymerized with at least one $C_3$-$C_{20}$ $\alpha$-olefin, such as 1-propylene, 1-butene, 1-isobutylene, 1-hexene, 4-methyl-1-pentene, 1-heptene and 1-octene, as well as other monomer types such as styrene, halo- or alkyl-substituted styrenes, tetrafluoro-ethylene, vinyl benzocydo-butane, 1,4-hexadiene, 1,7-octadiene, and cycloalkenes, for example, cyclopentene, cyclohexene and cyclooctene. Although the substantially linear ethylene/$\alpha$-olefin interpolymer can be a terpolymer where at least two $\alpha$-olefin monomers are polymerized with ethylene, preferably the interpolymer is a copolymer with one $\alpha$-olefin monomer copolymerized with ethylene and most preferably the substantially linear ethylene/$\alpha$-olefin interpolymer is a copolymer of ethylene and 1-octene.

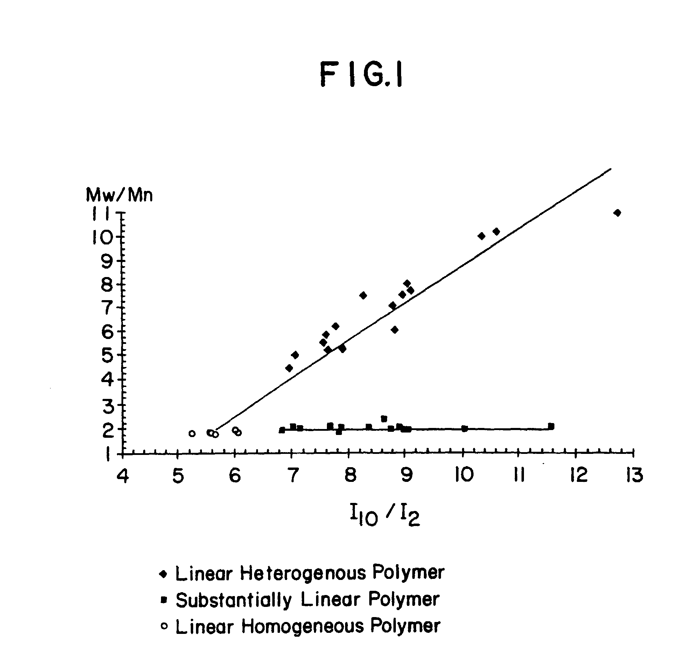

Substantially linear ethylene/$\alpha$-olefin polymers are not the conventional homogeneously branched linear ethylene/$\alpha$-olefin copolymers described in US Patent 3,645,992 (Elston) nor are they the same class as conventional Ziegler polymerized linear ethylene/$\alpha$-olefin copolymers (for example, linear low density polyethylene or linear high density polyethylene made, for example, using the technique disclosed by Anderson et al. in US Patent 4,076,698), nor are they the same as traditional highly branched LDPE. The substantially linear ethylene/$\alpha$-olefin polymers useful in this invention are indeed a unique class of polymers which have excellent processability, even though they have relatively narrow molecular weight distributions (typically, about 2). Even more surprisingly, as described in US Patent 5,278,272 by Lai et al., the melt flow ratio ($I_{10}/I_2$) of the substantially linear ethylene homopolymers or interpolymers can be varied essentially independently of the polydispersity index (that is, the molecular weight distribution, $M_w/M_n$). As Figure 1 illustrates, the rheological behavior of substantially linear ethylene polymers constitutes a dramatic contradistinction over to the homogeneous linear ethylene/$\alpha$-olefin polymer described by Elston and to conventional Ziegler polymerized heterogeneous linear polyethylene in that both heterogeneous linear and homogeneously linear ethylene polymers have rheological properties such that as the polydispersity index increases, the $I_{10}/I_2$ value also increases.

The "rheological processing index" (PI) is the apparent viscosity (in kpoise) of a polymer measured by a gas extrusion rheometer (GER). The gas extrusion rheometer is described by M. Shida, R.N. Shroff and L.V. Cancio in <u>Polymer Engineering Science</u>, Vol. 17, No. 11, p. 770 (1977), and in "Rheometers for Molten Plastics" by John Dealy, published by Van Nostrand Reinhold Co. (1982) on pp. 97-99. GER experiments are performed herein at a temperature of 190°C, at nitrogen pressures between 250 to 5500 psig (1.7 to 38 MPa) using a 3.81 cm diameter die and a 20:1 L/D rheometer with an entrance angle of 180°. The processing index is measured herein at 3,000 psig (21 MPa).

For the substantially linear ethylene/$\alpha$-olefin interpolymers used herein, the PI is the apparent viscosity (in kpoise) of a material measured by GER at an apparent shear stress of $2.15 \times 10^6$ dyne/cm$^2$. The substantially linear ethylene/$\alpha$-olefin interpolymers used herein preferably have a PI in the range of 0.01 kpoise to 50 kpoise, preferably 15 kpoise or less. The substantially linear ethylene/$\alpha$-olefin interpolymers used herein have a PI less than or equal to 70 percent of the PI of a comparative linear ethylene polymer (either a Ziegler polymerized polymer or a linear uniformly branched polymer as described by Elston in US Patent 3,645,992) at about the same $I_2$ and $M_w/M_n$.

An apparent shear stress versus apparent shear rate plot can be used to identify the melt fracture phenomena. According to Ramamurthy in the <u>Journal of Rheology</u>, 30(2), 337-357, 1986, above a certain critical flow rate, the observed extrudate irregularities may be broadly classified into two main types: surface melt fracture and gross melt fracture.

Surface melt fracture occurs under apparently steady flow conditions and ranges in detail from loss of specular film gloss to the more severe form of "sharkskin." In this disclosure, the onset of surface melt fracture (OSMF) is characterized at the beginning of losing extrudate gloss at which the surface roughness of the extrudate can only be detected by 40x magnification. The critical shear rate at the onset of surface melt fracture for the substantially linear ethylene/$\alpha$-olefin interpolymers is at least 50 percent greater than the critical shear rate at the onset of surface melt fracture of a comparative linear ethylene polymer (either a Ziegler polymerized heterogeneously branched polymer or a homogeneously branched polymer as described by Elston in US Patent 3,645,992) having about the same $I_2$ and $M_w/M_n$.

Gross melt fracture occurs at unsteady extrusion flow conditions and ranges in detail from regular (alternating rough and smooth, helical, etc.) to random distortions. For commercial acceptability, (for example, in blown films and bags therefrom), surface defects should be minimal, if not absent, for good film quality and properties. The critical shear rate at the onset of surface melt fracture (OSMF) and the onset of gross melt fracture (OGMF) will be used herein based on the changes of surface roughness and configurations of the extrudate.

To more fully characterize the rheological behavior of the unique substantially linear ethylene/$\alpha$-olefin interpolymers, S. Lai and G.W. Knight introduced <u>(ANTEC '93 Proceedings,</u> INSITE™ Technology Polyolefins (ITP) - New Rules in the Structure/Rheology Relationship of Ethylene $\alpha$-olefin Copolymers, New Orleans, La., May 1993) another rheological measurement, the Dow Rheology Index (DRI), which expresses a polymer's "normalized relaxation time as the result of long chain branching." DRI ranges from 0 for polymers which do not have any measurable long chain branching ( for example, "TAFMER" and "EXACT" products sold commercially by Mitsui Chemical and Exxon Chemical Company, respectively) to about 15 and is independent of melt index. In general, for low to medium density ethylene polymers (particularly at lower densities) DRI provides improved correlations to melt elasticity and high shear flowability relative to correlations of the same attempted with melt flow ratios. For the substantially linear ethylene/$\alpha$-olefin polymers used in this invention, DRI is preferably at least about 0.1, and especially at least about 0.5, and most especially at least 0.8. DRI can be calculated from the equation:

$$DRI = (3652879 * \tau_o^{1.00649}/\eta_o - 1)/10$$

where $\tau_o$ is the characteristic relaxation time of the material and $\eta_o$ is the zero shear viscosity of the material. Both $\tau_o$ and $\eta_o$ are the "best fit" values to the Cross equation, that is

$$\eta/\eta_o = 1/(1 + (\dot{\gamma} * \tau_o)^{1-n})$$

where **n** is the power law index of the material, and $\eta$ and $\gamma$ are the measured viscosity and shear rate, respectively. Baseline determination of viscosity and shear rate data are obtained using a Rheometric Mechanical Spectrometer (RMS-800) under dynamic sweep mode from 0.1 to 100 radians/second at 160°C and a Gas Extrusion Rheometer (GER) at extrusion pressures from 1,000 psi to 5,000 psi (6.89 to 34.5 MPa), which corresponds to shear stress from 0.086 to 0.43 MPa, using a 3.81 centimeter diameter die and 20:1 L/D rheometer at 190°C. Specific material determinations can be performed from 140 to 190°C as required to accommodate melt index variations.

Substantially linear ethylene/a-olefin interpolymers are considered to be "homogeneous" in composition distribution since substantially all of the polymer molecules have the same ethylene-to-comonomer ratio. Moreover, the substantially linear ethylene polymers have a narrow short chain (homogeneous) branching distribution, as defined by US Patent 3,645992. The distribution of comonomer branches for the substantially linear ethylene/$\alpha$-olefin interpolymers is characterized by its SCBDI (Short Chain Branch Distribution Index) or CDBI (Composition Distribution Branch Index) and is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as 'TREF'). The SCBDI or CDBI for the substantially linear ethylene/$\alpha$-olefin interpolymers used in the present invention is preferably greater than 30 percent, especially greater than 50 percent.

The substantially linear ethylene/$\alpha$-olefin polymers used in this invention essentially lack a measurable "high density" fraction, as measured by the TREF technique. Preferably, the substantially linear ethylene/$\alpha$-olefin interpolymers do not contain a polymer fraction with a degree of branching less than or equal to 2 methyls/1000 carbons. The "high density polymer fraction" can also be described as a polymer fraction with a degree of branching less than 2 methyls/1000 carbons.

The molecular weight and molecular weight distribution, $M_w/M_n$ ratio, of substantially linear ethylene/$\alpha$-olefin interpolymers can be analyzed by gel permeation chromatography (GPC) on a Waters 150 high temperature chromatographic unit equipped with differential refractometer and three columns of mixed porosity. The columns are supplied by Polymer Laboratories and are commonly packed with pore sizes of $10^3$, $10^4$, $10^5$ and $10^6$Å. The solvent is 1,2,4-trichlorobenzene, from which 0.3 percent by weight solutions of the samples are prepared for injection. The flow rate is 1.0 milliliters/minute, unit operating temperature is 140°C and the injection size is 100 microliters.

The molecular weight determination with respect to the polymer back-bone is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, p. 621, 1968) to derive the following equation:

$$M_{polyethylene} = a * (M_{polystyrene})^b.$$

In this equation, a = 0.4316 and b = 1.0. Weight average molecular weight, $M_w$, is calculated in the usual manner according to the following formula: $M_w = R\, w_i * M_i$, where $w_i$ and $M_i$ are the weight fraction and molecular weight, respectively, of the $i^{th}$ fraction eluting from the GPC column.

For the substantially linear ethylene/α-olefin interpolymers used in the present invention, the $M_w/M_n$ is preferably less than 3, especially from 1.5 to 2.5.

The novel film comprises from 5 to 40 weight percent, based on the combined weight of components (A) and (B), of the substantially linear ethylene/α-olefin interpolymer, preferably from 10 to 35 weight percent, and more preferably from 15 to 30 weight percent.

The substantially linear ethylene/α-olefin interpolymer used to prepared the film of the present invention has an $I_2$ melt index in the range of 0.3 g/10 minutes to 3 g/10, preferably, 0.3 g/10 minutes to 2.5 g/10 minutes and, more preferably, 0.4 g/10 minutes to 2 g/10 minutes. The substantially linear ethylene/α-olefin interpolymer has a density less about 0.92 g/cc, more preferably, in the range of 0.85 g/cc to 0.916 g/cc, and most preferably, in the range of 0.86 g/cc to 0.91 g/cc. The $I_{10}/I_2$ ratio of the substantially linear ethylene/α-olefin interpolymers is in the range from 5.63 to 30, preferably less than about 20, especially less than about 15, and most especially less than about 10.

Component (B) can be a blend of substantially linear ethylene/α-olefin interpolymers or, optionally, a blend of an SLEP interpolymer with at least one heterogeneous or homogeneous linear ethylene polymers selected from the group consisting of ULDPE and LLDPE. When the substantially linear ethylene/α-olefin interpolymer is employed in such blends, a blend of an SLEP with a heterogeneous ULDPE, component (C), is preferred.

Heterogeneously branched ULDPE and LLDPE are well known and commercially available materials. They are typically prepared using Ziegler-Natta catalysts in solution or gas phase polymerization processes Anderson et al., U.S. Pat. 4,076,698, is illustrative. These traditional Ziegler-type linear polyethylenes are not homogeneously branched and they do not have any long-chain branching. Heterogeneously branched ULDPE and LLDPE typical having molecular weight distributions, $M_w/M_n$, in the range of from 3.5 to 4.1.

Homogeneously branched ULDPE and LLDPE are also well known. Elston disclosure in U.S. Pat. 3,645,992 is illustrative. Homogeneously branched ULDPE and LLDPE can be prepared in conventional polymerization processes using Ziegler-type catalysts such as, for example, zirconium and vanadium catalyst systems as well as using metallocene catalyst systems such as, for example, those based on hafnium. Ewen et al. disclosure in U.S. Pat. 4,937,299 and Tsutsui et al. disclosure in U.S. Pat 5,218,071 are illustrative. This second class of linear polyethylenes are homogeneously branched polymers, and like traditional Ziegler-type heterogeneous linear polyethylenes, they do not have any long-chain branching. Homogeneously branched ULDPE and LLDPE typical having molecular weight distributions, $M_w/M_n$, of about 2. Commercial examples of homogeneously branched linear polyethylenes indude those sold by Mitsui Petrochemical Industries under the designation 'TAFMER" and by Exxon Chemical Company under the designation "EXACT".

The preparation of polyethylene film by blown film extrusion is well-known. See, for example, U.S. Patent 4,632,801 by Dowd which described a typical blown film extrusion process. In the typical process, a polyethylene composition is introduced into a screw extruder wherein it is melted and forwarded through the extruder under pressure. The molten polymer composition is forced through an annular film die to form a molten tube. Air is then provided through the annular die to inflate the tube into a "bubble" with the desired diameter. Air is contained within the bubble by the annular die and nip rollers downstream of the die where thereafter the bubble is collapse into layflat film. The final thickness of the film is controlled by extrusion rate, bubble diameter and nip speed which can be controlled by such variables as screw speed, haul-off rate and winder speed. Increasing the extrusion rate at a constant bubble diameter and nip speed, will increase final film thickness.

The typical blown extrusion process can be generally classified as either "stalk" or "pocket" extrusion. In stalk extrusion, bubble inflation and expansion are controlled or occur at a significant distance above the annular die. The air ring, usually of single-lip construction, provides air flow external to the tube and parallel to the machine direction such that the molten tube maintains the approximate diameter of the annular film die until it is inflated at a height at least 5 inches (12.7 centimeters) above the annular die. Internal bubble cooling can also be used as well as an internal bubble stabilizer to insure optimum bubble stability during fabrication.

Stalk extrusion is known to allow improved molecular relaxation and, as such, mitigates excessive orientation in one direction and thereby allows balanced film physical properties. Increasing the stalk or expansion height generally provides higher cross direction (CD) properties and, thereby, higher average film properties. Stalk extrusion, and particularly high-stalk extrusion, is very useful for preparing blown films from high molecular weight polyethylene compositions such as, for example, high molecular high density polyethylene (HMW-HDPE) and high molecular low density polyethylene (HMW-LDPE) which possess sufficient melt strength to insure adequate bubble stability.

In pocket extrusion, air is supplied by an air ring disposed immediately adjacent to the annular die to cause the bubble leaving the die to immediately inflate and expand. The air ring is typically a dual-lip type to insure added bubble stability. Pocket extrusion is more widely employed than stalk extrusion and is generally preferred for lower molecular weight, lower melt strength polyethylene compositions such as, for example, linear low density polyethylene (LLDPE) and ultra low density polyethylene (ULDPE).

Both monolayer and multilayer films can be prepared by stalk and pocket extrusion and the films of the present invention can be monolayer or multilayer structures. Multilayer films can be prepared by any known technique in the art, including, for example, coextrusion, lamination or combinations of both. However, the preferred medium modulus, thick polyethylene film of the present invention is a monolayer film structure.

Although the film of this invention can be prepared by variable stalk extrusion, pocket extrusion and low-stalk extrusion are preferred where the high molecular weight linear ethylene polymer, Component (A), has an $I_5$ melt index greater than about 0.5 g/10 minutes, particularly greater than about 0.6 g/10 minutes, and most particularly greater than about 0.7 g/10 minutes. High stalk extrusion, where the distance between the die and the occurrence of bubble expansion is usually from 30 to 42 inches (76 to 107 centimeters), that is, from 6 to 10 die diameters, is preferred for preparing of the film of this invention where the high molecular weight linear ethylene polymer, component (A), has an $I_5$ melt index less than or equal to about 0.5 g/10 minutes, particularly less than about 0.4 g/10 minutes, and most particularly less than about 0.3 g/10 minutes.

Components (A) and (B), and optional Component (C), used to prepare the film of this invention, can be individually blended ( that is, where a component itself is a polymer blend of two or more subcomponent polymers) or admixed together by any suitable means known in the art. Suitable means are thought to indude tumble dry-blending the components together prior to charging the blown film extruder, weigh-feeding the components directly into the blown film extruder, melt-blending the components via compound or side-arm extrusion prior to introduction into the blown film extruder, multiple reactor polymerization of the components with reactors in series or in parallel and optionally with different catalyst and/or monomer types in each reactor, or the like as well as combinations thereof.

In addition to the above equations respecting the tear and impact performance of the film of this invention, temperature rising elution fractionation (TREF) can also be used to" fingerprint" or identify the novel film of this invention as well as the film compositions used to make the novel film.

Additives, such as antioxidants ( for example, hindered phenolics, such as Irganox®1010 or Irganox® 1076 supplied by Ciba Geigy), phosphites ( for example, Irgafos® 168 also supplied by Ciba Geigy), cling additives ( for example, PIB), Standostab PEPQ™ (supplied by Sandoz), pigments, colorants, and fillers can also be included in the film of the present invention, or the polymer compositions used to make the same, to the extent that such additives or ingredients do not interfere with the improved tear and impact resistance performance discovered by Applicants. Although generally not required, the film of the present invention can also contain additives to enhance antiblocking and coefficient of friction characteristics including, but not limited to, untreated and treated silicon dioxide, talc, calcium carbonate, and clay, as well as primary, secondary and substituted fatty acid amides, release agents, silicone coatings, etc. Still other additives, such as quaternary ammonium compounds alone or in combination with ethylene-acrylic acid (EAA) copolymers or other functional polymers, can also be added to enhance the antistatic characteristics of the film of this invention and allow, for example, heavy-duty packaging of electronically sensitive goods.

Advantageously, because of the improved strength properties of the novel film, recycled and scrap materials as well as diluent polymers can be incorporated or admixed into the film compositions used to make the novel film at higher loadings than is typically possible with prior art polyethylene film compositions and still provide or maintain the desired performance properties for successful use in heavy-duty packaging and shipping applications. Suitable diluent materials include, for example, elastomers, rubbers and anhydride modified polyethylenes ( for example, polybutylene and maleic anhydride grafted LLDPE and HDPE) as well as with high pressure polyethylenes such as, for example, low density polyethylene (LDPE), ethylene/acrylic acid (EAA) interpolymers, ethylene/vinyl acetate (EVA) interpolymers and ethylene/methacrylate (EMA) interpolymers, and combinations thereof.

Examples

The following examples illustrate some of the particular embodiments of the present invention, but the following should not be construed to mean the invention is limited only to the particular embodiments shown.

Table 1 lists various resin types for use in investigating the requirements for improved medium modulus films.

Table 1

| Resin Types and Properties | | | | | | | | |
|---|---|---|---|---|---|---|---|---|
| Resin Type* | MI g/ 10min | Density g/cc | Melt Flow Ratio | $M_w/M_n$ | Critical Shear Rate 1/sec | Critical Shear Stress dyne/ $cm^2$ | Comonomer Type | Process Type |
| HMW-HDPE | $0.26\,I_5$ | 0.942 | $5.5\,I_{21.6}/I_{10}$ | NA | NA | NA | Butene | Slurry |
| HMW-HDPE | $0.75\,I_5$ | 0.951 | NA | NA | NA | NA | Butene | Slurry |
| HMW-MDPE | $0.26\,I_5$ | 0.935 | $5.3\,I_{21.6}/I_{10}$ | NA | NA | NA | Butene | Slurry |
| MDPE | $1.0\,I_2$ | 0.935 | $7.7I_{10}/I_2$ | NA | NA | $2,4 \times 10^6$ | Octene | Solution |
| ULDPE | $0.8\,I_2$ | 0.905 | $8.7\,I_{10}/I_2$ | 3.8-4.0 | NA | $3.6 \times 10^6$ | Octene | Solution |
| LLDPE | $1.0\,I_2$ | 0.920 | $7.6\,I_{10}/I_2$ | 3.5-3.8 | NA | $3.9 \times 10^6$ | Octene | Solution |
| SLEP | $0.8\,I_2$ | 0.911 | $10.9\,I_{10}/I_2$ | NA | 1,044 | $4.3 \times 10^6$ | Octene | Solution |
| SLEP | $1.0\,I_2$ | 0.870 | $7.4I_{10}/I_2$ | 1.98 | 503 | $3.0 \times 10^6$ | Octene | Solution |
| SLEP | $0.9\,I_2$ | 0.898 | $10.8I_{10}/I_2$ | 2.17 | 258 | $2.4 \times 10^6$ | Octene | Solution |
| SLEP | $1.0\,I_2$ | 0.902 | $7.5\,I_{10}/I_2$ | 2.12 | NA | $4.3 \times 10^6$ | Octene | Solution |
| SLEP | $1.0\,I_2$ | 0.909 | $9.6I_{10}/I_2$ | 2.06 | 1,766 | $4.5 \times 10^6$ | Octene | Solution |
| RM-HDPE | $0.1\,I_2$ | 0.935 | NA | NA | NA | NA | NA | NA |

*HMW-HDPE, HMW-HDPE, LLDPE, SLEP and MDPE resins are supplied by The Dow Chemical Company. RM-HDPE denotes a Polybutylene Rubber- Modified HDPE is supplied by Allied-Signal under the designation "PAXON 3208".

Tables 2 - 7 summarize the various component resins and film compositions for use in determining the requirements for medium modulus, polyethylene films with improved strength properties. The tables also summarize the fabrication conditions for use in investigating improved medium modulus, polyethylene film. Except for Inventive Example 43 which involves side-arm extrusion preparation, all blend compositions used in the investigation were performed by tumble-blending the individual polymer components together according to the weight percentage amounts shown in the various Tables.

Inventive Films 2-4, 6-8 and 10-12 as well as Comparative Films 1, 5, 7, 9 and 13-24 were fabricated by using a seven-zone Kiefel high stalk blown film line equipped with a grooved-barrel extruder, a decompression screw and no internal bubble cooling. Inventive Films 25-28, 34-40, 42 and 43 as well as Comparative Films 29-33 and 41 were fabricated utilizing a conventional pocket blown film line equipped a LLDPE barrier screw. With the exception of Comparative Films prepared from Compositions F and L, which were fabricated using an incline extruder temperature profile, all film fabrications employed a reverse temperature profile. The physical properties of the resultant Inventive Films and Comparative Films from Compositions A - W as a function of thickness are also summarized in Table 2 - 7.

The Tables report both measured and calculated film density. Like calculated film density determinations, the composition $I_5$ values reported in the tables were also derived from weight-fraction calculations. For purposes of this invention and for component polymers, all reported $I_2$ values less than 0.5 g/10 minutes and Is values greater than 1.0 g/10 minutes are calculated values based on the following relationship:

$$1.0I_2 = 5.1\,I_5.$$

Additionally, for component polymers, reported $I_{21.6}/I_{10}$ values less than 4.0 and $I_{10}/I_2$ values greater than 15 are also calculated values based on the following relationship:

$$4.4\, I_{10}/I_2 = 1.0 I_{21.6}/I_{10}.$$

For purposes of this invention, and as an example, the following computation is the weight-fraction calculation for determining the calculated film density of Inventive Example 1 which comprises 80 weight percent of a HDPE having a density of 0.942 g/cc and 20 weight percent of a SLEP having a density of 0.902 g/cc:

$$\text{calculated film density (g/cc)} = (0.8)(0.942\text{ g/cc}) + (0.2)(0.902\text{ g/cc}) = 0.934\text{ g/cc}.$$

The following computation example is the weight-fraction calculation for determining the calculated composition $I_5$ of Inventive Example 25 which comprises 80 weight percent of a HDPE having an $I_5$ of 0.75 g/10 minutes and 20 weight percent of a SLEP having an $I_2$ of 1.0 g/10 minutes:

$$\text{calculated composition } I_5 \text{ (g/10 min.)} = (0.8)(0.75\ I_5) + (0.2)(1.0\ I_2)(5.1\ I_5/1.0\ I_2) = 1.62\ I_5.$$

The following computation example is the factor-based calculation for determining the $I_5$ melt index of the SLEP having a 0.77 g/10 minutes $I_2$ that used to prepared Composition B:

$$\text{calculated component polymer } I_5 \text{ (g/10 min.)} = (0.77\ I_2)(5.1\ I_5/1.0\ I_2) = 3.93\ I_5.$$

The following computation example is the factor-based calculation for determining the $I_{21.6}/I_{10}$ ratio of the SLEP having a 10.9 $I_{10}/I_2$ ratio that used to prepared Composition B:

$$\text{calculated component polymer } I_{21.6}/I_{10} = (10.9\ I_{10}/I_2)(1.0\ I_{21.6}/I_{10} + 4.4\ I_{10}/I_2) = 2.47\ I_{21.6}/I_{10}.$$

The following computation example is the normalization calculation for determining the tear strength of Inventive Example 10 at 3 mils (75 μm) where the tear strength is 762 grams at 2.94 mils. (73.5 μm).

$$\text{tear strength at 3 mils (grams)} = (762\text{ g})(3.0\text{ mils}/2.94\text{ mils}) = 777\text{ grams}.$$

Table 2

| Film Compositions, Fabrication Conditions and Film Properties | | | | | | | | |
|---|---|---|---|---|---|---|---|---|
| COMPOSITION | A | | | | B | | | |
| INVENTIVE EXAMPLE | 1* | 2 | 3 | 4 | 5* | 6 | 7 | 8 |
| COMPONENT (A) | | | | | | | | |
| Type | HDPE | HDPE | HDPE | HDPE | HDPE | HDPE | HDPE | HDPE |
| Polymerization Process | Slurry | Slurry | Slurry | Slurry | Slurry | Slurry | Slurry | Slurry |
| Comonomer | Butene | Butene | Butene | Butene | Butene | Butene | Butene | Butene |
| $I_5$, grams/10 minutes | 0.26 | 0.26 | 0.26 | 0.26 | 0.26 | 0.26 | 0.26 | 0.26 |
| $I_2$, grams/10 minutes | 0.05 | 0.05 | 0.05 | 0.05 | 0.05 | 0.05 | 0.05 | 0.05 |
| Density, g/cc | 0.942 | 0.942 | 0.942 | 0.942 | 0.942 | 0.942 | 0.942 | 0.942 |

*Denotes Cmnparative Examples only, that is, the examples are not examples of the present invention. Cal. Film Density denotes calculated film density.

Table 2   (continued)

| Film Compositions, Fabrication Conditions and Film Properties | | | | | | | | |
|---|---|---|---|---|---|---|---|---|
| COMPOSITION | A | | | | B | | | |
| INVENTIVE EXAMPLE | 1* | 2 | 3 | 4 | 5* | 6 | 7 | 8 |
| $I_{21.6}/I_{10}$ | 5.5 | 5.5 | 5.5 | 5.5 | 5.5 | 5.5 | 5.5 | 5.5 |
| $I_{10}/I_2$ | 24.2 | 24.2 | 24.2 | 24.2 | 24.2 | 24.2 | 24.2 | 24.2 |
| COMPONENT (B) | | | | | | | | |
| Type Polymerization Process | SLEP Solution | SLEP Solution | SLEP Solution | SLEP Solution | SLEP Solution | SLEP Solution | SLEP Solution | SLEP Solution |
| Comonomer | Octene | Octene | Octene | Octene | Octene | Octene | Octene | Octene |
| $I_5$, grams/10 minutes | 5.1 | 5.1 | 5.1 | 5.1 | 3.9 | 3.9 | 3.9 | 3.9 |
| $I_2$, grams/10 minutes | 1.00 | 1.00 | 1.00 | 1.00 | 0.77 | 0.77 | 0.77 | 0.77 |
| Density, g/cc | 0.902 | 0.902 | 0.902 | 0.902 | 0.911 | 0.911 | 0.911 | 0.911 |
| $I_{21.6}/I_{10}$ | 1.7 | 1.7 | 1.7 | 1.7 | 2.5 | 2.5 | 2.5 | 2.5 |
| $I_{10}/I_2$ | 7.5 | 7.5 | 7.5 | 7.5 | 10.9 | 10.9 | 10.9 | 10.9 |
| (A)/(B) BLEND WT. percent | 80/20 | 80/20 | 80/20 | 80/20 | 80/20 | 80/20 | 80 /20 | 80/20 |
| FABRICATION CONDITIONS | | | | | | | | |
| Annular Die Diameter,mm | 113 | 113 | 113 | 113 | 113 | 113 | 113 | 113 |
| Extruder Diameter, mm | 70 | 70 | 70 | 70 | 70 | 70 | 70 | 70 |
| Extruder Length/ Diameter | 24/1 | 24/1 | 24/1 | 24/1 | 24/1 | 24/1 | 24/1 | 24/1 |
| Die Gap,mm | 1.2 | 1.2 | 1.2 | 1.2 | 1.2 | 1.2 | 1.2 | 1.2 |
| Output, kg/hr | 77 | 100 | 100 | 100 | 100 | 100 | 100 | 100 |
| Blow-Up Ratio | 3.3/1 | 3.3/1 | 3.3/1 | 3.3/1 | 3.3/1 | 3.3/1 | 3.3/1 | 3.3/1 |
| Stalk Height, cm | 104 | 104 | 104 | 104 | 104 | 104 | 104 | 104 |
| Target Melt Temperature, °C | 213 | 213 | 213 | 213 | 213 | 213 | 213 | 213 |
| PHYSICAL PROPERTIES | | | | | | | | |
| Film Thickness, mils (μm) | 0.48 (12) | 3.00 (75) | 5.10 (128) | 8.14 (204) | 0.60 (15) | 2.21 (55) | 3.70 (93) | 5.09 (127) |
| Cal. Film Density, g/cc | 0.934 | 0.934 | 0.934 | 0.934 | 0.935 | 0.935 | 0.935 | 0.935 |
| Composition $I_5$, g/10 min. | 1.20 | 1.20 | 1.20 | 1.20 | 0.71 | 0.71 | 0.71 | 0.71 |
| CD Tear, grams | 105 | 801 | 1205 | >1600 | 127 | 763 | 799 | 816 |
| MD Tear, grams | 11 | 642 | 1253 | >1600 | 8 | 199 | 499 | 777 |

*Denotes Cmnparative Examples only, that is, the examples are not examples of the present invention. Cal. Film Density denotes calculated film density.

Table 2   (continued)

| Film Compositions, Fabrication Conditions and Film Properties | | | | | | | | |
|---|---|---|---|---|---|---|---|---|
| COMPOSITION | A | | | | B | | | |
| INVENTIVE EXAMPLE | 1* | 2 | 3 | 4 | 5* | 6 | 7 | 8 |
| Tear Strength, grams | 58 | 722 | 1229 | >1600 | 68 | 481 | 649 | 797 |

*Denotes Cmnparative Examples only, that is, the examples are not examples of the present invention. Cal. Film Density denotes calculated film density.

Table 3

| Film Compositions, Fabrication Conditions and Film Properties | | | | | | | | |
|---|---|---|---|---|---|---|---|---|
| COMPOSITION | C | | | | D | | | |
| EXAMPLE | 9* | 10 | 11 | 12 | 13* | 14* | 15* | 16* |
| COMPONENT (A) | | | | | | | | |
| Type | HDPE | HDPE | HDPE | HDPE | HDPE | HDPE | HDPE | HDPE |
| Polymerization Process | Slurry | Slurry | Slurry | Slurry | Slurry | Slurry | Slurry | Slurry |
| Comonomer | Butene | Butene | Butene | Butene | Butene | Butene | Butene | Butene |
| $I_5$, grams/10 minutes | 0.26 | 0.26 | 0.26 | 0.26 | 0.26 | 0.26 | 0.26 | 0.26 |
| $I_2$, grams/10 minutes | 0.05 | 0.05 | 0.05 | 0.05 | 0.05 | 0.05 | 0.05 | 0.05 |
| Density, g/cc | 0.942 | 0.942 | 0.942 | 0.942 | 0.935 | 0.935 | 0.935 | 0.935 |
| $I_{21.6}/I_{10}$ | 5.5 | 5.5 | 5.5 | 5.5 | 5.25 | 5.25 | 5.25 | 5.25 |
| $I_{10}/I_2$ | 24.2 | 24.2 | 24.2 | 24.2 | 23.1 | 23.1 | 23.1 | 23.1 |
| COMPONENT (B) | | | | | | | | |
| Type | ULDPE | ULDPE | ULDPE | ULDPE | None | None | None | None |
| Polymerization Process | Solution | Solution | Solution | Solution | - | - | - | - |
| Comonomer | Octene | Octene | Octene | Octene | - | - | - | - |
| $I_5$, grams/10 minutes | 4.1 | 4.1 | 4.1 | 4.1 | - | - | - | - |
| $I_2$, grams/10 minutes | 0.8 | 0.8 | 0.8 | 0.8 | - | - | - | - |
| Density g/cc | 0.905 | 0.905 | 0.905 | 0.905 | - | - | - | - |
| $I_{21.6}/I_{10}$ | 2.0 | 2.0 | 2.0 | 2.0 | - | - | - | - |
| $I_{10}/I_2$ | 8.7 | 8.7 | 8.7 | 8.7 | - | - | - | - |
| COMPONENT (C) | | | | | | | | |
| Type | SLEP | SLEP | SLEP | SLEP | None | None | None | None |
| Polymerization Process | Solution | Solution | Solution | Solution | - | - | - | - |

*Denotes Comparative Examples only, that is, the examples are not examples of the present invention. Cal. Film Density denotes calculated Film density.

Table 3   (continued)

| Film Compositions, Fabrication Conditions and Film Properties | | | | | | | | |
|---|---|---|---|---|---|---|---|---|
| COMPOSITION | C | | | | D | | | |
| EXAMPLE | 9* | 10 | 11 | 12 | 13* | 14* | 15* | 16* |
| Comonomer | Octene | Octene | Octene | octene | - | - | - | - |
| $I_5$, grams/10 minutes | 3.9 | 3.9 | 3.9 | 3.9 | - | - | - | - |
| $I_2$, grams/10 minutes | 0.77 | 0.77 | 0.77 | 0.77 | - | - | - | - |
| Density, g/cc | 0.911 | 0.911 | 0.911 | 0.911 | - | - | - | - |
| $I_{21.6}/I_{10}$ | 2.5 | 2.5 | 2.5 | 2.5 | - | - | - | - |
| $I_{10}/I_2$ | 10.9 | 10.9 | 10.9 | 10.9 | - | - | - | - |
| (A)/(B)/(C) BLEND WT. percent | 80/10/10 | 80/10/10 | 80/10/10 | 80/10/10 | 100/0/0 | 100/0/0 | 100/0/0 | 100/0/0 |
| FABRICATION CONDITIONS | | | | | | | | |
| Annular Die Diameter, mm | 113 | 113 | 113 | 113 | 113 | 113 | 113 | 113 |
| Extruder Diameter, mm | 70 | 70 | 70 | 70 | 70 | 70 | 70 | 70 |
| Extruder Length/ Diameter | 24/1 | 24/1 | 24/1 | 24/1 | 24/1 | 24/1 | 24/1 | 24/1 |
| Die Gap. mm | 1.2 | 1.2 | 1.2 | 1.2 | 1.2 | 1.2 | 1.2 | 1.2 |
| Output, kg/hr | 77 | 100 | 100 | 100 | 77 | 100 | 100 | 100 |
| Blow-Up Ratio | 3.3/1 | 3.3/1 | 3.3/1 | 3.3/1 | 3.3/1 | 3.3/1 | 3.3/1 | 3.3/1 |
| Stalk Height, cm | 104 | 104 | 104 | 104 | 104 | 104 | 104 | 104 |
| Melt Temperature, °C | 213 | 213 | 213 | 213 | 213 | 213 | 213 | 213 |
| PHYSICAL PROPERTIES | | | | | | | | |
| Film Thickness, mils (μm) | 0.50 (13) | 2.94 (74) | 4.76 (119) | 7.76 (194) | 0.55 (14) | 2.88 (72) | 5.1 (128) | 6.17 (154) |
| Cal. Film Density, g/cc | 0.935 | 0.935 | 0.935 | 0.935 | 0.935 | 0.935 | 0.935 | 0.935 |
| Composition $I_5$, g/10 min. | 0.71 | 0.71 | 0.71 | 0.71 | 0.26 | 0.26 | 0.26 | 0.26 |
| CD Tear, grams | 141 | 1120 | 1471 | >1600 | 95 | 573 | 828 | 1100 |
| MD Tear, grams | 10 | 404 | 923 | >1600 | 9 | 306 | 726 | 969 |
| Tear Strength, grams | 76 | 762 | 1197 | >1600 | 52 | 440 | 777 | 1035 |

*Denotes Comparative Examples only, that is, the examples are not examples of the present invention. Cal. Film Density denotes calculated Film density.

Table 4

| COMPOSITION | E | | | | F | | | |
|---|---|---|---|---|---|---|---|---|
| Film Compositions, Fabrication Conditions and Film Properties | | | | | | | | |
| EXAMPLE | 17* | 18* | 19* | 20* | 21* | 22* | 23* | 24* |
| COMPONENT (A) | | | | | | | | |
| Type | HDPE | HDPE | HDPE | HDPE | MDPE | MDPE | MDPE | MDPE |
| Polymerization Process | Slurry | Slurry | Slurry | Slurry | Solution | Solution | Solution | Solution |
| Comonomer | Butene | Butene | Butene | Butene | Octene | Octene | Octene | Octene |
| $I_5$, grams/10 minutes | 0.26 | 0.26 | 0.26 | 0.26 | 5.1 | 5.1 | 5.1 | 5.1 |
| $I_2$, grams/10 minutes | 0.05 | 0.05 | 0.05 | 0.05 | 1.0 | 1.0 | 1.0 | 1.0 |
| Density, g/cc | 0.942 | 0.942 | 0.942 | 0.942 | 0.935 | 0.935 | 0.935 | 0.935 |
| $I_{21.6}/I_{10}$ | 5.5 | 5.5 | 5.5 | 5.5 | 1.8 | 1.8 | 1.8 | 1.8 |
| $I_{10}/I_2$ | 24.2 | 24.2 | 24.2 | 24.2 | 7.7 | 7.7 | 7.7 | 7.7 |
| COMPONENT (B) | | | | | | | | |
| Type | None | None | None | None | None | None | None | None |
| Polymerization Process | - | - | - | - | - | - | - | - |
| Comonomer | - | - | - | - | - | - | - | - |
| $I_5$, grams/10 minutes | - | - | - | - | - | - | - | - |
| $I_2$, grams/10 minutes | - | - | - | - | - | - | - | - |
| Density, g/cc | - | - | - | - | - | - | - | - |
| $I_{21.6}/I_{10}$ | - | - | - | - | - | - | - | - |
| $I_{10}/I_2$ | - | - | - | - | - | - | - | - |
| (A)/(B) BLEND WT. percent | 100/0 | 100/0 | 100/0 | 100/0 | 100/0 | 100/0 | 100/0 | 100/0 |
| FABRICATION CONDITIONS | | | | | | | | |
| Annular Die Diameter, mm | 113 | 113 | 113 | 113 | 152 | 152 | 152 | 152 |
| Extruder Diameter, mm | 70 | 70 | 70 | 70 | 64 | 64 | 64 | 64 |
| Extruder Length/Diameter | 24/1 | 24/1 | 24/1 | 24/1 | 24/1 | 24/1 | 24/1 | 24/1 |
| Die Gap, mm | 1.2 | 1.2 | 1.2 | 1.2 | 1.6 | 1.6 | 1.6 | 1.6 |
| Output kg/hr | 77 | 100 | 100 | 100 | 64 | 64 | 64 | 64 |
| Blow-Up Ratio | 3.3/1 | 3.3/1 | 3.3/1 | 3.3/1 | 2.5/1 | 2.5/1 | 2.5/1 | 2.5/1 |
| Stalk Height, cm | 104 | 104 | 104 | 104 | <12.7 | <12.7 | <12.7 | <12.7 |

*Denotes Comparative Examples only, that is, the examples are not examples of the present invention. Cal. Film Density denotes calculated film density.

Table 4   (continued)

| Film Compositions, Fabrication Conditions and Film Properties | | | | | | | | |
|---|---|---|---|---|---|---|---|---|
| COMPOSITION | E | | | | F | | | |
| EXAMPLE | 17* | 18* | 19* | 20* | 21* | 22* | 23* | 24* |
| Target Melt Temperarure, °C | 213 | 213 | 213 | 213 | 213 | 213 | 213 | 213 |
| PHYSICAL PROPERTIES | | | | | | | | |
| Film Thickness, mils (μm) | 0.86 (22) | 2.78 (70) | 4.73 (118) | 7.32 (183) | 0.62 (16) | 2.86 (72) | 3.48 (87) | 8.22 (206) |
| Cal. Film Density, g/cc | 0.942 | 0.942 | 0.942 | 0.942 | 0.935 | 0.935 | 0.935 | 0.935 |
| Composition $I_5$, g/10 min. | 0.26 | 0.26 | 0.26 | 0.26 | 5.1 | 5.1 | 5.1 | 5.1 |
| CD Tear, grams | 89 | 263 | 454 | 931 | 323 | 441 | 556 | 1359 |
| MD Tear, grams | 28 | 224 | 514 | 1054 | 31 | 305 | 333 | 1027 |
| Tear Strength, grams | 59 | 244 | 484 | 993 | 177 | 373 | 445 | 1193 |
| Impact Resistance, gram | NA | NA | NA | NA | 50 | 165 | 185 | 505 |

*Denotes Comparative Examples only, that is, the examples are not examples of the present invention. Cal. Film Density denotes calculated film density.

Table 5

| | COMPOSITION | G | H | I | J | K | L | M | N | O |
|---|---|---|---|---|---|---|---|---|---|---|
| | | | | | Film Compositions, Fabrication Conditions and Film Properties | | | | | | |
| | EXAMPLE | 25 | 26 | 27 | 28 | 29* | 30* | 31* | 32* | 33*z |
| COMPONENT (A) | | | | | | | | | | |
| Type | | HDPE | HDPE | HDPE | HDPE | None | MDPE | HDPE | None | HDPE |
| Polymerization Process | | Slurry | Slurry | Slurry | Slurry | - | Solution | Slurry | - | Slurry |
| Comonomer | | Butene | Butene | Butene | Butene | - | Octene | Butene | - | Butene |
| $I_5$, g/10 min. | | 0.75 | 0.75 | 0.75 | 0.75 | - | 5.1 | 0.75 | - | 0.3 |
| $I_2$, g/10 min. | | 0.15 | 0.15 | 0.15 | 0.15 | - | 1.0 | 0.15 | - | - |
| Density, g/cc | | 0.951 | 0.951 | 0.951 | 0.951 | - | 0.935 | 0.951 | - | 0.950 |
| $I_{10}/I_2$ | | NA | NA | NA | NA | - | 7.7 | NA | - | 24 |
| COMPONENT (B) | | | | | | | | | | |
| Type | | SLEP | SLEP | SLEP | SLEP | SLEP | None | None | LLDPE | None |
| Polymerizaton Process | | Solution | Solution | Solution | Solution | Solution | - | - | Solution | - |
| Comonomer | | Octene | Octene | Octene | Octene | Octene | - | - | Octene | - |
| $I_5$, g/10 min. | | 5.1 | 5.1 | 5.1 | 5.1 | 5.1 | - | - | 5.1 | - |
| $I_2$, g/10 min. | | 1.0 | 1.0 | 1.0 | 1.0 | 1.0 | - | - | 1.0 | - |
| Density, g/cc | | 0.870 | 0.870 | 0.870 | 0.870 | 0.870 | - | - | 0.920 | - |
| $I_{10}/I_2$ | | 7.4 | 7.4 | 7.4 | 7.4 | 7.4 | - | - | 7.6 | - |
| (A)/(B) BLEND WT. percent | | 80/20 | 75/25 | 85/15 | 90/10 | 0/100 | 100/0 | 100/0 | 0/100 | 100/0 |
| FABRICATION CONDITIONS | | | | | | | | | | |

*Denotes Comparative Examples only, that is, the examples are not examples of the present invention. Meas, Film Density denotes measured film density, NA denotes data not available. Viton is a fluoropolymer processing aid supplied by Dupont Chemical Company.

EP 0 759 048 B1

Table 5   (continued)

| Film Compositions, Fabrication Conditions and Film Properties | | | | | | | | | |
|---|---|---|---|---|---|---|---|---|---|
| COMPOSITiON | G | H | I | J | K | L | M | N | O |
| EXAMPLE | 25 | 26 | 27 | 28 | 29* | 30* | 31* | 32* | 33*z |
| Annular Die Diameter, mm | 152 | 203 | 203 | 152 | 152 | 152 | 152 | 152 | 113 |
| Extruder Diameter, mm | 64 | 89 | 89 | 64 | 64 | 64 | 64 | 64 | 70 |
| Extruder Length/ Diameter | 24/1 | 30/1 | 30/1 | 24/1 | 24/1 | 24/1 | 24/1 | 24/1 | 24/1 |
| Die Gap, mm | 1.6 | 2.8 | 2.8 | 1.6 | 1.6 | 1.6 | 1.6 | 1.6 | 1.2 |
| Output, kg/hr | 64 | 68 | 68 | 42 | 31 | 64 | 64 | 64 | 100 |
| Blow-Up Ratio | 2.5/1 | 2.5/1 | 2.5/1 | 2.0/1 | 2.0/1 | 2.5/1 | 2.5/1 | 2.5/1 | 3.3/1 |
| Stalk Height, cm | <12.7 | <12.7 | <12.7 | <12.7 | <12.7 | <12.7 | <12.7 | <12.7 | 104 |
| Viton Processing Aid | None | None | None | None | None | Yes | None | None | None |
| Extruder Amps | 58 | NA | NA | 58 | NA | 71 | 58 | 65 | NA |
| Melt Temperature, °C | 229 | 236 | 236 | 238 | 229 | 226 | 235 | 225 | NA |
| Die Pressure, psi (MPa) | 3170 (22) | 3450 (24) | 3450 (24) | 4650 (32) | 4170 (29) | 3170 (22) | 3420 (24) | 3130 (22) | NA |
| PHYSICAL PROPERTIES | | | | | | | | | |
| Film Thickness, mils (μm) | | 3.0 (75) | 3.0 (75) | 3.0 (75) | 3.0 (75) | 3.0 (75) | 3.0 (75) | 3.0 (75) | 3.0 (75) |
| Meas, Film Density, g/cc | 0.934 | 0.936 | 0.943 | 0.941 | 0.870 | 0.935 | 0.951 | 0.92 | 0.950 |
| Composition $I_5$, g/10 min. | 1.6 | 1.8 | 1.4 | 1.2 | 5.1 | 5.1 | 0.75 | 5.1 | 0.30 |
| CD Tear, grams | 324 | 1391 | 1826 | 464 | 91 | 328 | 80 | 1558 | 228 |
| MD Tear, grams | 1419 | 362 | 126 | 110 | 62 | 593 | 284 | >1600 | 125 |

*Denotes Comparative Examples only, that is, the examples are not examples of the present invention. Meas, Film Density denotes measured film density, NA denotes data not available. Viton is a fluoropolymer processing aid supplied by Dupont Chemical Company.

EP 0 759 048 B1

Table 5 (continued)

| Film Compositions, Fabrication Conditions and Film Properties | | | | | | | | | |
|---|---|---|---|---|---|---|---|---|---|
| COMPOSITiON | G | H | I | J | K | L | M | N | O |
| EXAMPLE | 25 | 26 | 27 | 28 | 29* | 30* | 31* | 32* | 33*z |
| Tear Strength, grams | 872 | 876 | 976 | 287 | 77 | 461 | 182 | 1580 | 177 |
| Impact Resistance, grams | 425 | 432 | 198 | 185 | >850 | 250 | 125 | 800 | NA |

*Denotes Comparative Examples only, that is, the examples are not examples of the present invention. Meas, Film Density denotes measured film density, NA denotes data not available. Viton is a fluoropolymer processing aid supplied by Dupont Chemical Company.

EP 0 759 048 B1

Table 6

| Film Compositiom, Fabrication Conditions and Film Properties | | | | | | | | |
|---|---|---|---|---|---|---|---|---|
| COMPOSITION | P | Q | R | S | T | U | V | W |
| EXAMPLE | 34 | 35 | 36 | 37 | 38 | 39 | 40 | 41* |
| COMPONENT (A) | | | | | | | | |
| Type | HDPE | HDPE | HDPE | HDPE | HDPE | HDPE | HDPE | RM-HDPE |
| Polymerization Process | Slurry | Slurry | Slurry | Slurry | Slurry | Slurry | Slurry | Rubber |
| Comonomer (or Rubber Type) | Butene | Butene | Butene | Butene | Butene | Butene | Butene | Polybutylene |
| $I_5$, g/10 min. | 0.75 | 0.75 | 0.75 | 0.75 | 0.75 | 0.75 | 0.75 | 0.51 |
| $I_2$, g/10 min. | 0.15 | 0.15 | 0.15 | 0.15 | 0.15 | 0.15 | 0.15 | 0.10 |
| Density, g/cc | 0.951 | 0.951 | 0.951 | 0.951 | 0.951 | 0.951 | 0.951 | 0.935 |
| $I_{10}/I_2$ | NA | NA | NA | NA | NA | NA | NA | NA |
| COMPONENT (B) | | | | | | | | |
| Type | ULDPE | ULDPE | SLEP | SLEP | SLEP | SLEP | SLEP | None |
| Polymerization Process | Solution | Solution | Solution | solution | Solution | Solution | Solution | - |
| Comonomer | Octene | Octene | Octene | Octene | Octene | Odene | Octene | - |
| $I_5$, g/10 min. | 4.1 | 4.1 | 4.6 | 4.6 | 5.1 | 5.1 | 4.6 | - |
| $I_2$, g/10 min. | 0.8 | 0.8 | 0.9 | 0.9 | 1.0 | 1.0 | 0.9 | - |
| Density, g/cc | 0.905 | 0.905 | 0.898 | 0.898 | 0.909 | 0.909 | 0.898 | - |
| $I_{10}/I_2$ | 8.7 | 8.7 | 10.8 | 10.8 | 9.6 | 9.6 | 10.8 | - |
| COMPONENT (C) | | | | | | | | |
| Type | None | None | None | None | None | None | ULDPE | None |

*Denotes Comparative Examples only, that is, the examples are not examples of the present invention. Meas. Film Density denotes measured film density. NA denotes data not available. RM-HDPE denotes PAXON 3208 polybutylene rubber modified HDPE.

EP 0 759 048 B1

EP 0 759 048 B1

Table 6   (continued)

| Film Compositiom, Fabrication Conditions and Film Properties | | | | | | | | |
|---|---|---|---|---|---|---|---|---|
| COMPOSITION | P | Q | R | S | T | U | V | W |
| EXAMPLE | 34 | 35 | 36 | 37 | 38 | 39 | 40 | 41* |
| Polymerization Process | - | - | - | - | - | - | Solution | - |
| Comonomer | - | - | - | - | - | - | Octene | - |
| $I_5$, g/10 min. | - | - | - | - | - | - | 4.1 | - |
| $I_2$, g/10 min. | - | - | - | - | - | - | 0.8 | - |
| Density, g/cc | - | - | - | - | - | - | 0.905 | - |
| $I_{10}/I_2$ | - | - | - | - | - | - | 8.7 | - |
| (A)/(B)/(C) BLEND WT. percent | 90/10/0 | 80/20/0 | 90/10/0 | 80/20/0 | 90/10/0 | 80/20/0 | 80/10/10 | 100/0 |
| CONDITIONS FABRICATION | | | | | | | | |
| Annular Die Diameter, mm | 152 | 152 | 152 | 152 | 152 | 152 | 152 | 152 |
| Extruder Diameter, mm | 64 | 64 | 64 | 64 | 64 | 64 | 64 | 64 |
| Extruder Length/ Diameter | 24/1 | 24/1 | 24/1 | 24/1 | 24/1 | 24/1 | 24/1 | 24/1 |
| Die Gap, mm | 1.6 | 1.6 | 1.6 | 1.6 | 1.6 | 1.6 | 1.6 | 1.6 |
| Output, kg/hr | 31 | 31 | 31 | 31 | 31 | 31 | 31 | 31 |
| Blow-Up Ratio | 2.0/1 | 2.0/1 | 2.0/1 | 2.0/1 | 2.0/1 | 2.0/1 | 2.0/1 | 2.0/1 |
| Stalk Height, cm | <12.7 | <12.7 | <12.7 | <12.7 | <12.7 | <12.7 | <12.7 | <12.7 |
| Target Melt Temperature, °C | 229 | 229 | 229 | 229 | 229 | 229 | 229 | 229 |
| Die Pressure, psi (MPa) | 4170 (29) | 4170 (29) | 4170 (29) | 4170 (29) | 4170 (29) | 4170 (29) | 4170 (29) | 4170 (29) |

*Denotes Comparative Examples only, that is, the examples are not examples of the present invention. Meas. Film Density denotes measured film density. NA denotes data not available. RM-HDPE denotes PAXON 3208 polybutylene rubber modified HDPE.

Table 6   (continued)

| Film Compositiom, Fabrication Conditions and Film Properties | | | | | | | | |
|---|---|---|---|---|---|---|---|---|
| COMPOSITION | P | Q | R | S | T | U | V | W |
| EXAMPLE | 34 | 35 | 36 | 37 | 38 | 39 | 40 | 41* |
| PHYSICAL PROPERTIES | | | | | | | | |
| Film Thickness, mils ($\mu$m) | 3.0 (75) | 3.0 (75) | 3.0 (75) | 3.0 (75) | 3.0 (75) | 3.0 (75) | 3.0 (75) | 3.0 (75) |
| Meas. Film Density, g/cc | 0.944 | 0.941 | 0.950 | 0.940 | 0.945 | 0.942 | 0.941 | 0.934 |
| Composition $I_5$, g/10 min. | 1.1 | 1.4 | 1.1 | 1.5 | 1.2 | 1.6 | 1.5 | 0.51 |
| CD Tear, grams | 322 | 411 | 318 | 506 | 266 | 328 | 312 | 544 |
| MD Tear, grams | 115 | 138 | 114 | 131 | 94 | 112 | 110 | 110 |
| Tear Strength, grams | 219 | 275 | 216 | 319 | 180 | 220 | 211 | 327 |
| Impact Resistance, grams | 175 | 173 | 164 | 175 | 163 | 164 | 164 | 403 |

*Denotes Comparative Examples only, that is, the examples are not examples of the present invention. Meas. Film Density denotes measured film density. NA denotes data not available. RM-HDPE denotes PAXON 3208 polybutylene rubber modified HDPE.

Table 7

| COMPOSITION | G† | G† |
|---|---|---|
| EXAMPLE | 42 | 43 |
| COMPONENT (A) | | |
| Type | HDPE | HDPE |
| Polymerization Process | Slurry | Slurry |
| Comonomer | Butene | Butene |
| $I_5$, g/10 min. | 0.75 | 0.75 |
| $I_2$, g/10 min. | 0.15 | 0.15 |
| Density, g/cc | 0.951 | 0.951 |
| $I_{10}/I_2$ | NA | NA |
| | | |
| COMPONENT (B) | | |
| Type | SLEP | SLEP |
| Polymerization Process | Solution | Solution |
| Comonomer | Octene | Octene |
| $I_5$, g/10 min. | 5.1 | 5.1 |
| $I_2$, g/10 min. | 1.0 | 1.0 |
| Density, g/cc | 0.870 | 0.870 |
| $I_{10}/I_2$ | 7.4 | 7.4 |
| | | |
| (A)/(B) BLEND WT. percent | 80/20 | 80/20 |
| | | |
| FABRICATION CONDITIONS | | |
| Annular Die Diameter, mm | 152 | 152 |
| Extruder Diameter, mm | 64 | 64 |
| Extruder Length/Diameter | 24/1 | 24/1 |
| Die Gap, mm | 2.8 | 2.8 |
| Output, kg/hr | 64 | 64 |
| Blow-Up Ratio | 2.5/1 | 2.5/1 |
| Stalk Height, cm | <12.7 | 102 |
| Frost Line Height, cm | 76 | 127 |
| Target Melt Temperature, °C | 232 | 232 |
| | | |
| PHYSICAL PROPERTIES | | |
| Film Thickness, mils (μm) | 3.0 (75) | 3.0 (75) |
| Meas. Film Density, g/cc | 0.934 | 0.934 |
| Impact Resistance, grams | 400 | 425 |

*Denotes Comparative Examples only, that is, the examples are not examples of the present invention. Meas. Film Density denotes measured film density. NA denotes data not available. †Denotes composition G is prepared in a commercial-scale slurry polymerization manufacturing plant by side-arm extrusion incorporation of the substantially linear ethylene/α-olefin interpolymer.

The physical property data in Tables 2 - 7 and Figures 2 - 4 demonstrate that films prepared in accordance with the present invention exhibit substantially improved tear strength and impact resistance in comparisons with other films prepared from individual component polymers that have the same film density, film thickness and similar melt index. The tables also show Inventive Films exhibit superior tear strength and impact resistance over PAXON 3208 (Comparative Example 41), a polybutylene rubber modified HDPE used commercially for a variety of heavy-duty packaging applications. The superior performance of the Inventive Films of the present invention allow practitioners downgauging savings while still providing polyethylene films that meet the demanding requirements of heavy-duty packaging.

Figure 2 specifically illustrates that Inventive Films prepared from Composition A, B and C exhibit superior tear strength at film thicknesses greater than 1.25 mils (31 microns), particularly in the range of 1.5 to 8.75 mils (37.5 to 219 μm), and especially in the range of 2 mils (50 μm) to 8 mils (200 μm) in comparison to Comparative Films prepared from Compositions D, E and F.

Figure 2 also shows Inventive Films comprising Components (A) and (B) as well as those comprising Components (A), (B) and (C) as three-component blends, exhibit exceptional comparative tear performance. A comparison between the Inventive Films prepared using Compositions B and C indicates a substantially linear ethylene/α-olefin interpolymer, Component (B), having an $I_{10}/I_2$ ratio less than about 10 is most preferred for film thicknesses greater than about 3 mils (75 μm). In direct comparisons, Inventive Films show from 30 percent greater tear strength at 3 mils (75 μm) (comparison between films based on Compositions B and D) to as high as about 180 percent greater tear strength at 5 mils (125 μm) (comparison between films based on Compositions C and E).

Figure 3 shows at equivalent densities, Inventive Films (Inventive Examples 25-28 and 34-38) exhibit superior impact resistance at 3 mils (75 μm) over Comparative Films (Comparative Examples 22 and 30-32 where Comparative Examples 22 and 30 are averaged and plotted as a single data point). Figure 3 also indicates Inventive Examples 25 and 26 show more than 100 percent greater impact resistance than is ordinarily expected for their respective measured densities. These Inventive Films also indicate that substantially linear ethylene/α-olefin interpolymers, Component (B), having densities less than 0.89 g/cc are most preferred for preparing the novel film of the present invention.

Figure 4 illustrates Inventive Examples 25, 26 and 27 exhibit synergistically superior tear strength relative to predicated or calculated performance based on their respective component polymers, a 0.951 g/cc HMW-HDPE and a 0.87 g/cc SLEP at 100 percent/0 percent, 90 percent/10 percent, 80 percent/20, 70 percent/30 percent and 0 percent/100 percent, respectively. Figure 4 also shows that Inventive Films can exhibit more than about 90 percent greater tear strength than comparative films having about the same melt index, film thickness and measured film density.

Table 7 specifically indicates, although low-stalk and pocket extrusion are preferred for fabricating Inventive Film comprising a Component (A) polymer having a $I_5$ greater than 0.5 g/10 minutes, Inventive Films can also be successfully fabricated using variable-stalk extrusion, that is pocket and stalk extrusion. Even more surprisingly, is these Inventive Examples indicate the novel film can be fabricated with a high-stalk on conventional pocket extrusion lines. This feature of the invention allows Practitioners the significant commercial benefits of equipment selection flexibility and equipment utilization efficiency.

## Claims

1. A medium modulus, polyethylene film characterized as having a thitkness greater than 1.25 mils (31 μm) which comprises:

   (A) from 60 to 95 weight percent, based on the combined weight of components (A) and (B), of at least one high molecular weight linear ethylene polymer having a density in the range of 0.92 to 0.96 g/cc and an $I_5$ melt index in the range of 0.1 to 3 g/10 minutes, and
   (B) from 5 to 40 weight percent, based on the combined weight of components (A) and (B), of at least one substantially linear ethylene/α-olefin interpolymer characterized as having:

   i. a melt flow ratio, $I_{10}/I_2$, $\geq 5.63$,
   ii. a molecular weight distribution, $M_w/M_n$, defined by the equation:

   $$M_w/M_n \leq (I_{10}/I_2) - 4.63,$$

   and
   iii. a critical shear rate at onset of surface melt fracture at least 50 percent greater than the critical shear rate at onset of surface melt fracture of a Ziegler polymerized heterogeneously branched linear ethylene polymer or homogeneously branched linear ethylene polymer having about the same $I_{\cdot 2}$ and $M_w/M_n$,

   wherein the substantially linear ethylene/α-olefin interpolymer is further characterized as containing at least one α-olefin monomer and having a density in the range of 0.85 to 0.92 g/cc and an $I_2$ melt index in the range of 0.3 to 3 g/10 minutes.

2. The film of Claim 1 wherein said film is a blown film.

3. The film of Claim 1 wherein the film thickness is in the range of 15 mils (37.5 μm) to 8.75 mils (219 μm).

4. The film of Claim 3 wherein the film thickness is in the range of 2 mils (50 μm) to 8 mils ( 200 μm).

5. The film of Claim 1 wherein the calculated film density is in the range of .0.923 g/cc to 0.95 g/cc.

6. The film of Claim 1 wherein said high molecular weight linear ethylene polymer is an interpolymer of ethylene and at least one α-olefin selected from the group consisting of propylene, 1-butene, 4-methyl-1-pentene, 1-hexene and 1-octene.

7. The film of Claim 6 wherein said high molecular weight linear ethylene interpolymer is a copolymer of ethylene and 1-butene.

8. The film of Claim 1 wherein said substantially linear ethylene/α-olefin interpolymer is further characterized as having from 0.01 long chain branches/1000 carbons to 3 long chain branches/1000 carbons along the polymer backbone.

9. The film of Claim 1 wherein said substantially linear ethylene/α-olefin interpolymer is an interpolymer of ethylene and at least one α-olefin selected from the group consisting of propylene, 1-butene, 4-methyl-1-pentene, 1-hexene and 1-octene.

10. The film of Claim 9 wherein said substantially linear ethylene/α-olefin interpolymer is a copolymer of ethylene and 1-octene.

11. The film of Claim 1 wherein said high molecular weight linear ethylene polymer has an $I_5$ melt index in the range of 0.1 g/10 minutes to 2 g/10 minutes.

12. The film of Claim 1 wherein said substantially linear ethylene /α-olefin interpolymer has an $I_2$ melt index in the range of 0.3 g/10 minutes to 2.5 g/10 minutes.

13. The film of Claim 1 wherein said high molecular weight linear ethylene polymer has a density in the range of 0.93g/cc to 0.96 g/cc.

14. The film of Claim 1 wherein said substantially linear ethylene/α-olefin interpolymer has a density in the range of 0.86 g/cc to 0.91 g/cc.

15. A method for preparing a medium modulus, polyethylene film comprising the steps of:

(1) providing an extrudable thermoplastic composition containing (A) from 60 to 95 weight percent, based on the combined weights of components (A) and (B), of at least one high molecular weight linear ethylene polymer having a density in the range of 0.92 to 0.96 g/cc and an $I_5$ melt index in the range of 0.1 to 3g/10 minutes, and (B) from 5 to 40 weight percent; based on the combined weights of components (A) and (B), of at least one substantially linear ethylene/α-olefin interpolymer characterized as having:

i. a melt flow ratio, $I_{10}/I_2$, $\geq 5.63$,
ii. a molecular weight distribution, $M_w/M_n$, defined by the equation:

$$M_w/M_n \leq (I_{10}/I_2) - 4.63,$$

and
iii. a critical shear rate at onset of surface melt fracture at least 50 percent greater than the critical shear rate at onset of surface melt fracture of a Ziegler polymerized heterogeneously branched linear ethylene polymer or homogeneously branched linear ethylene polymer having about the same $I_2$ and $M_w/M_n$,

wherein the substantially linear ethylene/α-olefin interpolymer is further characterized as containing at least one α-olefin monomer and having a density in the range of 0.85 to 0.92 g/cc and an $I_2$ melt index in the range of 0.3 to 3 g/10 minutes.

(2) introducing said composition of step (1) into a heated film extrusion apparatus equipped with an annular die,

(3) extruding said composition through said annular die to form a molten or semi-molten thermoplastic tube of said composition that is subsequently blown-up beyond the die diameter and drawn-down through nip and take-off rollers to form a layflat film with a thickness greater than 1.25 mils (31 μm), and

(4) conveying said film formed in step (3) for subsequent use down-line of the blown film extrusion apparatus of step (2) or collecting said film formed in step (3) for subsequent use offline.

**16.** The method of Claim 15 wherein said extrusion apparatus is a variable stalk extrusion film line.

**17.** The film produced by the method of Claim 16.

**Patentansprüche**

1. Polyethylenfolie mit mittlerem Modul, dadurch gekennzeichnet, daß sie eine Dicke von mehr als 1,25 Mil (31 μm) aufweist, umfassend:

(A) von 60 bis 95 Gewichtsprozent, basierend auf dem kombinierten Gewicht der Komponenten (A) und (B), von mindestens einem linearen Ethylenpolymer mit hohem Molekulargewicht mit einer Dichte im Bereich von 0,92 bis 0,96 g/cm$^3$ und einem $I_5$-Schmelzindex im Bereich von 0,1 bis 3g/10 Minuten, und

(B) von 5 bis 40 Gewichtsprozent, basierend auf dem kombinierten Gewicht der Komponenten (A) und (B), von mindestens einem im wesentlichen linearen Ethylen/α-Olefininterpolymer, dadurch gennzeichnet, daß es:

i. ein Schmelzflußverhältnis $I_{10}/I_2 \geq 5{,}63$

ii. eine Molekulargewichtsverteilung $M_w/M_n$, die durch die Gleichung:

$$M_w/M_n \leq (I_{10}/I_2)\text{-}4{,}63 \text{ definiert ist,}$$

und

iii. eine kritische Scherrate beim Einsetzen des Oberflächenschmelzbruchs von mindestens 50 Prozent höher als die kritische Scherrate beim Einsetzen des Oberflächenschmelzbruchs eines Ziegler-polymerisierten heterogen verzweigten linearen Ethylenpolymers oder eines homogen verzweigten linearen Ethylenpolymers mit etwa dem gleichen $I_2$ und $M_w/M_n$, aufweist,

worin das im wesentlichen lineare Ethylen/α-Olefininterpolymer weiter dadurch gekennzeichnet ist, daß es mindestens ein α-Olefinmonomer enthält und eine Dichte im Bereich von 0,85 bis 0,92 g/cm$^3$ und einen $I_2$-Schmelzindex im Bereich von 0,3 bis 3 g/10 Minuten aufweist.

2. Folie nach Anspruch 1, worin die Folie eine Blasfolie ist.

3. Folie nach Anspruch 1, worin die Foliendicke im Bereich von 1,5 Mil (37,5 μm) bis 8,75 Mil (219 μm) ist.

4. Folie nach Anspruch 3, worin die Foliendicke im Bereich von 2 Mil (50 μm) bis 8 Mil (200 μm) ist.

5. Folie nach Anspruch 1, worin die berechnete Foliendichte im Bereich von 0,923 g/cm$^3$ bis 0,95 g/cm$^3$ ist.

6. Folie nach Anspruch 1, worin das lineare Ethylenpolymer mit hohem Molekulargewicht ein Interpolymer von Ethylen und mindestens einem α-Olefin, ausgewählt aus der Gruppe, bestehend aus Propylen, 1-Buten, 4-Methyl-1-penten, 1-Hexen und 1-Octen ist.

7. Folie nach Anspruch 6, worin das lineare Ethyleninterpolymer mit hohem Molekulargewicht ein Copolymer von Ethylen und 1-Buten ist.

8. Folie nach Anspruch 1, worin das im wesentlichen lineare Ethylen/α-Olefininterpolymer weiter dadurch gekennzeichnet ist, daß es von 0,01 Langkettenverzweigungen/1000 Kohlenstoffe bis 3 Langkettenverzweigungen/1000 Kohlenstoffe entlang des Polymergrundgerüsts aufweist.

9. Folie nach Anspruch 1, worin das im wesentlichen lineare Ethylen/$\alpha$-Olefinterpolymer ein Interpolymer von Ethylen und mindestens einem $\alpha$-Olefin, ausgewählt aus der Gruppe, bestehend aus Propylen, 1-Buten, 4-Methyl-1-penten, 1-Hexen und 1-Octen ist.

10. Folie nach Anspruch 9, worin das im wesentlichen lineare Ethylen/$\alpha$-Olefininterpolymer ein Copolymer von Ethylen und 1-Octen ist.

11. Folie nach Anspruch 1, worin das lineare Ethylenpolymer mit hohem Molekulargewicht einen $I_5$-Schmelzindex im Bereich von 0,1 g/10 Minuten bis 2 g/10 Minuten aufweist.

12. Folie nach Anspruch 1, worin das im wesentlichen lineare Ethylen/$\alpha$-Olefininterpolymer einen $I_2$-Schmelzindex im Bereich von 0,3 g/10 Minuten bis 2,5 g/10 Minuten aufweist.

13. Folie nach Anspruch 1, worin das lineare Ethylenpolymer mit hohem Molekulargewicht eine Dichte im Bereich von 0,93 g/cm$^3$ bis 0,96 g/cm$^3$ aufweist.

14. Folie nach Anspruch 1, worin das im wesentlichen lineare Ethylen/$\alpha$-Olefininterpolymer eine Dichte im Bereich von 0,86 g/cm$^3$ bis 0,91 g/cm$^3$ aufweist.

15. Verfahren zur Herstellung einer Polyethylen-Folie mit einem mittleren Modul, umfassend die Schritte:

(1) Bereitstellen einer extrudierbaren thermoplastischen Zusammensetzung, enthaltend

(A) von 60 bis 95 Gewichtsprozent, basierend auf dem kombinierten Gewicht der Komponenten (A) und (B), von mindestens einem linearen Ethylenpolymer mit hohem Molekulargewicht mit einer Dichte im Bereich von 0,92 bis 0,96 g/cm$^3$ und einem $I_5$-Schmelzindex im Bereich von 0,1 bis 3 g/10 Minuten, und (B) von 5 bis 40 Gewichtsprozent, basierend auf dem kombinierten Gewicht der Komponenten (A) und (B), von mindestens einem im wesentlichen linearen Ethylen/$\alpha$-Olefininterpolymer, dadurch gennzeichnet, daß es:

i. ein Schmelzflußverhältnis $I_{10}/I_2 \geq 5{,}63$
ii. eine Molekulargewichtsverteilung $M_w/M_n$, die durch die Gleichung:

$$M_w/M_n \geq (I_{10}/I_2)\text{-}4{,}63 \text{ definiert ist,}$$

und
iii. eine kritische Scherrate beim Einsetzen des Oberflächenschmelzbruchs von mindestens 50 Prozent höher als die kritische Scherrate beim Einsetzen des Oberflächenschmelzbruchs eines Zieglerpolymerisierten heterogen verzweigten linearen Ethylenpolymers oder eines homogen verzweigten linearen Ethylenpolymers mit etwa dem gleichen $I_2$ und $M_w/M_n$, aufweist,

worin das im wesentlichen lineare Ethylen/$\alpha$-Olefininterpolymer weiter dadurch gekennzeichnet ist, daß es mindestens ein $\alpha$-Olefinmonomer enthält und eine Dichte im Bereich von 0,85 bis 0,92 g/cm$^3$ und einen $I_2$-Schmelzindex im Bereich von 0,3 bis 3 g/10 Minuten aufweist,

(2) Leiten der Zusammensetzung von Schritt (1) in eine erwärmte Folienextrusionsvorrichtung, die mit einer ringförmigen Düse ausgestattet ist,
(3) Extrudieren der Zusammensetzung durch die ringförmige Düse, um einen geschmolzenen oder teilweise geschmolzenen thermoplastischen Folienschlauch der Zusammensetzung zu bilden, der nachfolgend über den Düsendurchmesser hinaus aufgeblasen wird und durch Quetschwalzen und Abzugswalzen ausgezogen wird, um eine flach ausliegende Folie mit einer Dicke von mehr als 1,25 Mil (31 μm) zu bilden, und
(4) Befördern der in Schritt (3) gebildeten Folie zur nachfolgenden Verwendung down-line der Blasfolienextrusionsvorrichtung von Schritt (2) oder Aufnehmen der in Schritt (3) gebildeten Folie zur nachfolgenden Offline-Verwendung.

16. Verfahren nach Anspruch 15, worin die Extrusionsvorrichtung eine Folienextrusionsvorrichtung mit variablem Angußkanal ist.

17. Folie, die nach dem Verfahren von Anspruch 16 hergestellt wurde.

**Revendications**

1. Film de polyéthylène de module moyen, caractérisé en ce que son épaisseur est supérieure à 1,25 mils (31 μm), comprenant :

   (A) de 60 à 95 % en poids, ramené au poids total des composants (A) et (B) combinés, d'au moins un polymère d'éthylène linéaire à haut poids moléculaire ayant une densité de 0,92 à 0,96 g/cm$^3$ et un indice de fluidité $I_5$ de 0,1 à 3 g/10 minutes ; et
   (B) de 5 à 40 % en poids, ramené au poids total des composants (A) et (B) combinés, d'au moins un interpolymère d'éthylène et d'α-oléfine sensiblement linéaire, caractérisé en ce qu'il présente :

   i) un rapport d'indice de fluidité $I_{10}/I_2 \geq 5,63$ ;
   ii) une distribution des poids moléculaires $M_w/M_n$ définie par l'équation :

   $$M_w/M_n \leq (I_{10}/I_2) - 4,63 \; ;$$

   et
   iii) un gradient de cisaillement critique à l'amorce de fragilité de fusion superficielle supérieur d'au moins 50 % au gradient de cisaillement critique à l'amorce de fragilité de fusion superficielle d'un polymère d'éthylène linéaire à ramification hétérogène polymérisé selon le procédé Ziegler ou d'un polymère d'éthylène linéaire à ramification homogène ayant un indice $I_2$ et un rapport $M_w/M_n$ à peu près identiques ;

   dans lequel l'interpolymère d'éthylène et d'α-oléfine sensiblement linéaire est en outre caractérisé en ce qu'il contient au moins un monomère d'α-oléfine et qu'il présente une densité de 0,85 à 0,92 g/cm$^3$ et un indice de fluidité $I_2$ de 0,3 à 3 g/10 minutes.

2. Film selon la revendication 1, dans lequel ledit film est un film soufflé.

3. Film selon la revendication 1, dans lequel l'épaisseur du film est comprise entre 1,5 mil (37,5 μm) et 8,75 mils (219 μm).

4. Film selon la revendication 3, dans lequel l'épaisseur du film est comprise entre 2 mils (50 μm) et 8 mils (200 μm).

5. Film selon la revendication 1, dans lequel la densité calculée du film est comprise entre 0,923 g/cm$^3$ et 0,95 g/cm$^3$.

6. Film selon la revendication 1, dans lequel ledit polymère d'éthylène linéaire à haut poids moléculaire est un interpolymère d'éthylène et d'au moins une α-oléfine choisie dans le groupe formé par le 1-propylène, le 1-butène, le 1-isobutylène, le 4-méthyl-1-pentène, le 1-hexène, le 1-heptène et le 1-octène.

7. Film selon la revendication 6, dans lequel ledit interpolymère d'éthylène linéaire à haut poids moléculaire est un copolymère d'éthylène et de 1-butène.

8. Film selon la revendication 1, dans lequel ledit interpolymère d'éthylène et α-oléfine sensiblement linéaire est en outre caractérisé en ce qu'il possède de 0,01 ramification à chaîne longue pour 1000 carbones à 3 ramifications à chaîne longue pour 1000 carbones le long du squelette polymère.

9. Film selon la revendication 1, dans lequel ledit interpolymère d'éthylène et α-oléfine sensiblement linéaire est un interpolymère d'éthylène et d'au moins une α-oléfine choisie dans le groupe formé par le 1-propylène, le 1-butène, le 1-isobutylène, le 4-méthyl-1-pentène, le 1-hexène, le 1-heptène et le 1-octène.

10. Film selon la revendication 9, dans lequel ledit interpolymère d'éthylène et α-oléfine sensiblement linéaire est un copolymère d'éthylène et de 1-octène.

11. Film selon la revendication 1, dans lequel ledit polymère d'éthylène linéaire à haut poids moléculaire a un indice

de fluidité $I_5$ de 0,1 g/10 minutes à 2 g/10 minutes.

12. Film selon la revendication 1, dans lequel l'interpolymère d'éthylène et $\alpha$-oléfine sensiblement linéaire a un indice de fluidité $I_2$ de 0,3 g/10 minutes à 2,5 g/10 minutes.

13. Film selon la revendication 1, dans lequel ledit polymère d'éthylène linéaire à haut poids moléculaire a une densité de 0,93 $g/cm^3$ à 0,96 $g/cm^3$.

14. Film selon la revendication 1, dans lequel ledit interpolymère d'éthylène et $\alpha$-oléfine sensiblement linéaire a une densité de 0,86 $g/cm^3$ à 0,91 $g/cm^3$.

15. Procédé de préparation d'un film de polyéthylène de module moyen, comprenant les étapes consistant à :

(1) préparer une composition thermoplastique extrudable contenant (A) de 60 à 95 % en poids, ramené au poids total des composants (A) et (B) combinés, d'au moins un polymère d'éthylène linéaire à haut poids moléculaire ayant une densité de 0,92 à 0,96 $g/cm^3$ et un indice de fluidité $I_5$ de 0,1 à 3 g/10 minutes ; et (B) de 5 à 40 % en poids, ramené au poids total des composants (A) et (B) combinés, d'au moins un interpolymère d'éthylène et d'$\alpha$-oléfine sensiblement linéaire, caractérisé en ce qu'il présente :

i) un rapport d'indice de fluidité $I_{10}/I_2 \geq 5,63$ ;
ii) une distribution des poids moléculaires $M_w/M_n$ définie par l'équation :

$$M_w/M_n \leq (I_{10}/I_2) - 4,63 ;$$

et
iii) un gradient de cisaillement critique à l'amorce de fragilité de fusion superficielle supérieur d'au moins 50 % au gradient de cisaillement critique à l'amorce de fragilité de fusion superficielle d'un polymère d'éthylène linéaire à ramification hétérogène polymérisé selon le procédé Ziegler ou d'un polymère d'éthylène linéaire à ramification homogène ayant un indice 1.2 et un rapport $M_w/M_n$ à peu près identiques ;

dans lequel l'interpolymère d'éthylène et d'$\alpha$-oléfine sensiblement linéaire est en outre caractérisé en ce qu'il contient au moins un monomère d'$\alpha$-oléfine et qu'il présente une densité de 0,85 à 0,92 $g/cm^3$ et un indice de fluidité $I_2$ de 0,3 à 3 g/10 minutes ;
(2) introduire ladite composition de l'étape (1) dans un appareil d'extrusion de films chauffé équipé d'une filière annulaire ;
(3) extruder ladite composition de l'étape (1) afin de former un tube qui est ensuite soufflé et étiré par l'intermédiaire de rouleaux lamineurs et de rouleaux détacheurs pour former un film en gaine aplatie d'épaisseur supérieure à 1,25 mil (31 µm) environ ; et
(4) transporter ledit film formé à l'étape (3) pour une utilisation ultérieure en aval de l'appareil d'extrusion de film de l'étape (2) ou récupérer ledit film formé à l'étape (3) pour une utilisation ultérieure hors ligne.

16. Procédé selon la revendication 15, dans lequel ledit appareil d'extrusion est une ligne d'extrusion de films à tige variable.

17. Film produit par le procédé de la revendication 16.

# FIG.1

Mw/Mn

$I_{10} / I_2$

• Linear Heterogenous Polymer
▪ Substantially Linear Polymer
○ Linear Homogeneous Polymer

FIG. 2

## FIG. 3

- • Inventive Films (Examples 25-27)

- ■ Inventive Films (Examples 28 & 34-38)

- ○ Comparative Films (Examples 22, 30, 31 & 32)

## FIG. 4

- • Inventive Films (Examples 25,26 & 27)
- ∘ Comparative Films (Examples 18,22,29,30,31,32 & 33)
- ▫ Calculated or Predicted Film